# EUROPÄISCHE PATENTSCHRIFT

(11) **EP 1 613 696 B1**
(45) Veröffentlichungstag und Bekanntmachung des Hinweises auf die Patenterteilung: **14.06.2006**
(21) Anmeldenummer: 05734025.9
(22) Anmeldetag: 22.04.2005
(51) Int. Cl.: C08L 57/08, C08K 5/3492, C08K 3/22, C08K 5/07

(54) **STABILISATORZUSAMMENSETZUNG FÜR HALOGENHALTIGE THERMOPLASTISCHE HARZZUSAMMENSETZUNGEN MIT VERBESSERTER LAGERFÄHIGKEIT**
STABILIZER COMPOSITION FOR HALOGEN-CONTAINING THERMOPLASTIC RESIN COMPOSITIONS HAVING AN IMPROVED SHELF LIFE
COMPOSITION DE STABILISANT POUR COMPOSITIONS DE RESINES THERMOPLASTIQUES RENFERMANT DES HALOGENES, A STABILITE AU STOCKAGE AMELIOREE

(30) Priorität: 23.04.2004 DE 102004019947
(43) Veröffentlichungstag der Anmeldung: 11.01.2006
(73) Patentinhaber: Baerlocher GmbH, 85716 Unterschleissheim (DE)
(72) Erfinder: REITH, Walter, 82281 Egenhofen (DE)
(74) Vertreter: Fiesser, Gerold Michael
(86) Internationale Anmeldenummer: PCT/EP2005/004379
(87) Internationale Veröffentlichungsnummer: WO 2005/103148

(56) Entgegenhaltungen:
- DE-A1- 4 134 325
- DE-A1- 19 818 441

## Beschreibung

Die vorliegende Erfindung betrifft eine Calcium (Ca) und Zink (Zn) enthaltende Stabilisatorzusammensetzung für thermoplastische Harzzusammensetzungen, insbesondere für Harzzusammensetzungen auf Polyvinylchlorid - (PVC) - Basis.

Halogenhaltige Polymere unterliegen einer Vielzahl von gebrauchs- oder umweltinduzierten chemischen Abbaureaktionen, beispielsweise durch Einwirkung von elektromagnetischer Strahlung oder von Wärme oder von Kombinationen aus zwei oder mehr äußeren Einflüssen, die zu nachhaltigen Beeinträchtigungen der Gebrauchseigenschaften führen können oder bereits zu Problemen während der Verarbeitung führen. Bei dem Abbau halogenierter Polymerer, insbesondere bei PVC, entsteht oft Salzsäure, die aus dem Polymerstrang eliminiert wird, woraus ein verfärbter, ungesättigter Kunststoff mit farbgebenden Polyensequenzen resultiert.

Besonders problematisch wirkt sich dabei aus, dass halogenhaltige Polymere erst bei einer relativ hohen Verarbeitungstemperatur die zur Verarbeitung notwendigen rheologischen Rahmenbedingungen aufweisen. Bei derartigen Temperaturen setzt jedoch bei unstabilisierten Polymeren bereits eine merkliche Zersetzung des Polymeren ein, die sowohl zu der oben beschriebenen unerwünschten Farbänderung als auch zu einer Änderung der Materialeigenschaften führt. Darüber hinaus kann die aus nicht stabilisierten, halogenhaltigen Polymeren bei einer derartigen Verarbeitungstemperatur freigesetzte Salzsäure zu einer merklichen Korrosion der Verarbeitungsanlagen führen. Dieser Vorgang spielt insbesondere dann eine Rolle, wenn es bei der Verarbeitung derartiger halogenierter Polymerer zu Formkörpern, beispielsweise durch Extrusion, zu Produktionsunterbrechungen kommt und die Polymermasse für eine längere Zeitdauer im Extruder verweilt. Während dieser Zeit kann es in besonderem Maße zu den oben genannten Zersetzungsreaktionen kommen, wodurch das im Extruder befindliche Material unbrauchbar wird und der Extruder gegebenenfalls geschädigt wird.

Weiterhin neigen Polymere, die einer derartigen Zersetzung unterworfen sind, dazu, Anhaftungen an den Verarbeitungsanlagen zu bilden, die nur schwierig wieder zu entfernen sind und damit den Produktionsprozess hinsichtlich seiner Wirtschaftlichkeit nachteilig beeinflussen sowie gegebenenfalls die Produktqualität nachteilig beeinflussen.

Um die genannten Probleme zu lösen, werden halogenhaltigen Polymeren zur Verarbeitung üblicherweise als sogenannte Stabilisatoren Verbindungen zugesetzt, welche die oben genannten Zersetzungsreaktionen möglichst weitgehend verhindern sollen. In der Regel handelt es sich bei derartigen Stabilisatoren um Feststoffe, welche dem zu verarbeitenden Polymeren vor seiner Verarbeitung zugegeben werden.

Der Einsatz von Calciumhydroxid als Stabilisator für PVC wird beispielsweise in der DE 29 35 689 A1 beschrieben. Aus der EP 0 394 547 B1 ist die Kombination von überbasischen Erdalkalicarboxylaten mit Zeolith, Calciumhydroxid und Perchloraten bekannt.

Die gemäß den oben genannten Druckschriften offenbarten Lösungsansätze zeigen jedoch keine abschließend befriedigende Stabilisierung bei hoher Beanspruchungslage.

Die WO 99/55777 beschreibt eine Stabilisatorzusammensetzung für halogenhaltige thermoplastische Harzzusammensetzungen. Gemäß der Druckschrift wird zur Stabilisierung ein Gemisch aus gegebenenfalls oberflächenmodifiziertem Calciumhydroxid und/oder Calciumoxid und einem hydroxylgruppenhaltigen Isocyanurat vorgeschlagen. Während die dort beschriebenen Zusammensetzungen bereits eine deutliche Verbesserung der Stabilität halogenhaltiger Harzzusammensetzungen hinsichtlich des vorstehend zitierten Standes der Technik bewirken, ist das Verhalten der entsprechend stabilisierten Zusammenetzungen in einigen Verarbeitungssituationen jedoch noch nicht völlig befriedigend. Darüber hinaus weisen die Oberflächen der aus einer derartigen Zusammensetzung hergestellten Profile oft Unregelmäßigkeiten auf, die das Erscheinungsbild der Profile nachteilig beeinflussen. Weiterhin läßt die Rheologie der Zusammensetzungen bei der Verarbeitung verschiedentlich zu wünschen übrig. Insbesondere dann, wenn auf einen möglichst geringen Gehalt an Stabilisatorbestandteilen Wert gelegt wird, lassen die Stabilisierungergebnisse in einigen Fällen noch Spielraum für Verbesserungen des Stabilisierungsergebnisses.

Verarbeitungshilfsmittel sind zur gezielten Einstellung der Eigenschaften während und nach der Verarbeitung von halogenhaltigen thermoplastischen Polymeren in der Regel unerläßlich. Neben dem Aspekt der oft nicht unerheblichen Kosten, die für solche Verarbeitungshilfsmittel aufgewandt werden müssen, rückt immer häufiger die Beeinflussung des gesamten Eigenschaftsbilds eines halogenhaltigen thermoplastischen Polymeren durch Stabilisatoren und Verarbeitungshilfsmittel in den Blickpunkt der verarbeitenden Industrie. In zunehmendem Maße werden daher bei der Verarbeitung von halogenhaltigen Polymeren Stabilisatoren verlangt, die auch bei geringen Einsatzmengen gleichzeitig ausgezeichnete Verarbeitungseigenschaften und eine den jeweiligen Bedürfnissen angemessene Stabilität bewirken. Aus dem Stand der Technik sind zwar Stabilisatorsysteme bekannt, die auf einzelnen Gebieten der Stabilisierung oder der rheologischen Beeinflussung gute Ergebnisse erzielen, die gleichzeitige Einstellung guter Stabilisierungs- und Verarbeitungseigenschaften führt jedoch oft zum Einsatz eines Gemischs aus Stabilisatoren und weiteren Verarbeitungshilfsmitteln, dessen Einsatzmenge hinsichtlich des erzielten Ergebnisses zu groß ist.

Als Maßnahme zur Verbesserung der stabilisierenden Eigenschaften von Stabilisatorzusammensetzungen, die zur Stabilisierung halogenhaltiger Polymerer eingesetzt werden wird im Stand der Technik vorgeschlagen, Beta-Diketone einzusetzen.

So beschreibt beispielsweise die DE 694 29 805 T2 die Verwendung von Beta-Diketonen als Stabilisatoren für halogenhaltige Polymere. Weitere Druckschriften die den Einsatz derartiger Verbindungen zur Stabilisierung halogenhaltiger Polymerer beschreiben sind beispielsweise die US 5,475,145, EP 0 346 279 A1 oder EP 0 307 358 A1.

Mit der Wirkung von β-Diketonen in Stabilisatorzusammensetzungen setzte sich beispielsweise die nicht vorveröffentlichte Deutsche Patentanmeldung mit der Nr. 10352762.1 auseinander. Der Druckschrift ist zu entnehmen, dass ein Gehalt an β-Diketonen oder Salzen davon von weniger als 0,5 phr, bezogen auf das zu stabilisierende thermoplastische Harz oder die zu stabilisierenden thermoplastischen Harze, vorteilhafte Auswirkungen aufweist. Die dort beschriebenen Zusammensetzungen zeigen zwar bei einem verringerten Gehalt an β-Diketonen eine zu den aus dem Stand der Technik bekannten Zusammensetzungen mindestens gleichwertige Wirkung. Bei besonders ungünstigen Lagerbedingungen können sich jedoch entsprechende Zusammensetzungen derart Verfärben, dass sich bereits die Anfangsfarbe einer entsprechend stabilisierten Zusammensetzungen, die mindestens ein halogenhaltiges Polymeres enthält, verschlechtert. Darüber hinaus kann sich bei entsprechend ungünstigen Lagerbedingungen bereits eine Verfärbung der Stabilisatorzusammensetzungen selbst ergeben, die vom Anwender für nicht akzeptabel befunden wird.

Der Erfindung liegt daher die Aufgabe zugrunde, eine Stabilisatorzusammensetzung für halogenhaltige thermoplastische Harze zur Verfügung zu stellen, die im Vergleich zu den bekannten Fonnulierungen eine ausreichende Thermostabilität aufweist. Der Erfindung liegt als weitere Aufgabe zugrunde, eine Stabilisatorzusammensetzung für halogenhaltige thermoplastische Harze zur Verfügung zu stellen, die im Vergleich zu den bekannten Formulierungen eine zumindest gleichwertige Farbhaltung aufweist. Der Erfindung liegt weiterhin die Aufgabe zugrunde, eine Stabilisatorzusammensetzung für halogenhaltige thermoplastische Harze zur Verfügung zu stellen, die besonders für den Einsatz in PVC-U für den Außenbereich geeignet ist. Darüber hinaus soll eine deratige Stabilisatorzusammensetzung auch im Hinblick auf einen Einsatz von aus einer derart stabilisierten Polymerzusammensetzung hergestellten Formkörpern im Außenbereich ausgezeichnete Farbstabilität bei thermischer Belastung und Belastung durch energiereiche Strahlung bieten. Der Erfindung liegt weiterhin die Aufgabe zugrunde, eine Stabilisatorzusammensetzung für halogenhaltige thermoplastische Harze zur Verfügung zu stellen, die kein "plate-out" (Ablagerungen im Extruder oder im Kaliber) zeigt und auf vielen verschiedenen Maschinen einsetzbar ist. Weiterhin liegt der Erfindung die Aufgabe zugrunde, eine Stabilisatorzusammensetzung für halogenhaltige thermoplastische Harze zur Verfügung zu stellen, die in vielen verschiedenen Formulierungen, d.h. mit unterschiedlichen PVC-Typen, unterschiedlichen Kreidetypen, unterschiedlichen Impact Modifiern sowie bei unterschiedlichen Dosierungen dieser Additive eingesetzt werden kann. Darüber hinaus liegt der vorliegenden Erfindung die Aufgabe zugrunde, Stabilisatorzusammensetzungen zur Verfügung zu stellen, welche auch bei extremen Lagerungsbedingungen, beispielsweise bei hoher Temperatur oder hoher Luftfeuchtigkeit oder beiden Bedingungen, keine oder eine möglichst geringe Verfärbung sowie eine gute Erhaltung der Konsistenz der Stabilisatorzusammensetzungen selbst bzw. keine oder eine möglichst geringe Veränderung der Anfangsfarbe eines mit einer solchen Stabilisatorzusammensetzung stabilisierten halogenhaltigen Polymeren bewirkt.

Diese Aufgabe wird erfindungsgemäß gelöst durch eine Stabilisatorzusammensetzung für halogenhaltige thermoplastische Harze, umfassend
a) Calciumhydroxid oder Calciumoxid oder deren Gemische, die gegebenenfalls oberflächenmodifiziert sein können,
b) mindestens ein β-Diketon oder ein Salz eines β-Diketons und
c) mindestens ein hydroxylgruppenhaltiges Isocyanurat.

Gegenstand der vorliegenden Erfindung ist daher eine Stabilisatorzusammensetzung zur Stabilisierung halogenhaltiger thermoplastischer Harze, umfassend
a) Calciumhydroxid oder Calciumoxid oder ein Gemisch aus Calciumhydroxid und Calciumoxid als Komponente A und
b) mindestens ein β-Diketon oder ein Salz eines β-Diketons oder deren Gemisch als Komponente B und
c) mindestens ein hydroxylgruppenhaltiges Isocyanurat oder ein Gemisch aus zwei oder mehr hydroxylgruppenhaltigen Isocyanuraten als Komponente C,
wobei Komponente B weniger als 33 Gew.-%, bezogen auf Komponente B, an Acetylaceton oder einem Salz von Acetylaceton oder einem Gemisch davon enthält.

Eine Stabilisatorzusammensetzungen gemäß der vorliegenden Erfindung eignet sich grundsätzlich zur Stabilisierung von Zusammensetzungen, die mindestens ein halogenhaltiges Polymeres, insbesondere mindestens ein halogenhaltiges thermoplastisches Harz enthalten. Es ist dabei erfindungsgemäß vorgesehen, dass eine erfindungsgemäße Stabilisatorzusammensetzungen mindestens ein stabilisierendes Calciumsalz enthält. Als stabilisierende Calciumsalze sind grundsätzlich alle Calciumsalze geeignet, die einen stabilisierenden Einfluss auf halogenhaltige thermoplastische Harze zeigen, insbesondere einen stabilisierenden Einfluss hinsichtlich Abbauerscheinungen durch thermische Belastungen, wie sie insbesondere bei der Verarbeitung solcher halogenhaltigen thermoplastischen Harze auftreten.

Als Komponente A eignen sich insbesondere Calciumoxid oder Calciumhydroxid oder deren Gemisch in im wesentlichen beliebiger Form. Calciumoxid oder Calciumhydroxid werden dabei vorzugsweise in Pulverform eingesetzt. Geeignete Pulver können eine im Wesentlichen beliebige Größenverteilung der Pulverteilchen aufweisen, solange sich das Stabilisierungsergebnis durch die gewählte Teilchengrößenverteilung nicht oder nicht wesentlich mehr als den Umständen nach tolerierbar, verschlechtert. Entsprechendes gilt für die BET-Oberfläche der eingesetzten Teilchen.

Beispielsweise werden im Rahmen der vorliegenden Erfindung Calciumoxid- oder Calciumhydroxidpartikel eingesetzt, die einen Wert D50 für die Teilchengrößenverteilung von etwa 30 µm oder weniger aufweisen, insbesondere weniger als etwa 10 µm. oder weniger als etwa 5 µm. Die sekundäre Partikelgröße (Agglomeratgröße) sollte einen Wert von etwa 40 µm nicht überschreiten. Vorzugsweise beträgt die sekundäre Partikelgröße weniger als etwa 40 µm, insbesondere weniger als etwa 30 µm oder weniger als etwa 20 µm.

Die Calciumoxid oder Calciumhydroxidpartikel können gegebenenfalls in dem Fachmann bekannter Weise oberflächenmodifiziert sein. Besonders geeignet sind mit Stearinsäure oder 12-Hydroxystearinsäure oberflächenmodifizierte Partikel.

Es hat sich erfindungsgemäß herausgestellt, dass besonders gute Ergebnisse erzielt werden können, wenn die Stabilisatorzusammensetzung die Komponente A in einer Menge von 0,01 bis 2 phr, bezogen auf das zu stabilisierende thermoplastische Harz oder die zu stabilisierenden thermoplastischen Harze, enthält. Besonders geeignete Anteile an Komponente A liegen beispielsweise in einem Bereich von etwa 0,05 bis etwa 1,0 phr, oder innerhalb eines Bereichs von etwa 0,08 bis etwa 0,8 phr. Ebenfalls geeignet sind beispielsweise Mengen von etwa 0,1 bis etwa 0,5 phr, beispielsweise etwa 0,15 bis etwa 0,45 phr oder etwa noch in 0,2 bis etwa 0,4 phr oder etwa 0,25 bis etwa 0,35 phr oder etwa 0,28 bis etwa 0,32 phr. Der Gehalt an Komponente A beträgt im Rahmen einer bevorzugten Ausführungsform der vorliegenden Erfindung etwa 0,05 bis 0,3299 phr, bezogen auf das zu stabilisierende thermoplastische Harz oder die zu stabilisierenden thermoplastischen Harze.

Neben der Komponente A enthält eine erfindungsgemäße Zusammensetzung noch mindestens ein β-Diketon oder ein Salz eines β-Diketons oder deren Gemisch als Komponente B. Das heißt, dass eine erfindungsgemäße Zusammensetzung beispielsweise ein β-Diketon oder ein Gemisch aus zwei oder mehr β-Diketonen, oder ein Salz eines β-Diketons oder ein Gemisch aus zwei oder mehrere Salzen eines β-Diketons oder ein Gemisch aus zwei oder mehr Salzen von zwei oder mehr β-Diketonen oder ein Gemisch von einem β-Diketon und einem Salz eines β-Diketons oder ein Gemisch aus zwei oder mehr β-Diketonen und einem Salz eines β-Diketons oder ein Gemisch aus zwei oder mehr β-Diketonen und einem Gemisch aus zwei oder mehr Salzen eines β-Diketons oder ein Gemisch aus zwei oder mehr β-Diketonen und einem Gemisch aus zwei oder mehr Salzen von zwei oder mehr β-Diketonen oder ein Gemisch aus einem β-Diketon und einem Gemisch aus zwei oder mehr Salzen eines β-Diketons oder ein Gemisch aus einem β-Diketon und einem Gemisch aus zwei oder mehr Salzen von zwei oder mehr β-Diketonen enthalten kann.

Es hat sich jedoch im Rahmen der vorliegenden Erfindung herausgestellt, dass sich die Lagerstabilität von Stabilisatorzusammensetzungen gemäß der vorliegenden Erfindung im Vergleich zu Stabilisatorzusammensetzungen, wie sie aus dem Stand der Technik bekannt sind, dann durch verbesserte Eigenschaften hervorhebt, wenn der Anteil an Acetylaceton oder an Salzen von Acetylaceton oder einem Gemisch aus zwei oder mehr davon, weniger als 33 Gew.-% der gesamten Komponente B ausmacht.

Als β-Diketone eignen sich beispielsweise Verbindungen der allgemeinen Formel I 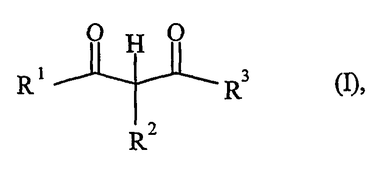 worin R¹ und R³ jeweils unabhängig voneinander für eine gegebenenfalls substituierte lineare oder verzweigte Alkyl- oder Alkenylgruppe mit 1 bis 30 Kohlenstoffatomen eine gegebenenfalls substituierte Aralkylgruppe mit 7 bis 31 C-Atomen, eine gegebenenfalls substituierte Aryl- oder Heteroarylgruppe mit 3 bis 14 C-Atomen im Ring, eine gegebenenfalls substituierte Cycloalkylgruppe mit 3 bis 18 C-Atomen oder abhängig voneinander jeweils R¹ oder R³ für O-R¹oder HN-R¹ stehen können und R² für O-R¹ oder COOH oder eine gegebenenfalls substituierte lineare oder verzweigte Alkylgruppe mit 1 bis 24 C-Atomen steht oder jeweils R¹ oder R³ oder R¹ und R³ zusammen mit R² einen gegebenenfalls substituierten cycloaliphatischen oder heterocycloaliphatischen Ring mit unabhängig voneinander jeweils 3 bis 18 C-Atomen bilden, sowie deren Salze.

Wie bereits im Rahmen des vorliegenden Textes verdeutlicht, stellt sich die erfindungsgemäße Wirkung dann ein, wenn der Anteil an Acetylaceton oder dessen Salzen oder einem Gemisch aus Acetylaceton und dessen Salzen an der Komponente B 33 Gew.-% oder weniger beträgt. Vorzugsweise liegt dieser Anteil bei weniger als etwa 25, weniger als etwa 20, weniger als etwa 15, weniger als etwa 13, weniger als etwa 10, weniger als etwa 5, weniger als etwa 3, weniger als etwa 2, weniger etwa als etwa 1, weniger als etwa 0,5, weniger als etwa 0,1 oder weniger als etwa 0,05 Gew.-%. Im Rahmen einer weiteren bevorzugten Ausführungsform der vorliegenden Erfindung ist Komponente B im wesentlichen frei von Acetylaceton oder dessen Salzen, d. h., der Anteil an Acetylaceton in Komponente B oder dessen Salzen oder einem Gemisch aus zwei oder mehr davon liegt bei weniger als etwa 0,01 Gew.-%, beispielsweise im Bereich von etwa 0,001 bis weniger als etwa 0,01 Gew.% oder darunter.

Vorzugsweise steht im Rahmen der vorliegenden Erfindung daher mindestens einer der Reste R¹ oder R³ in der obigen allgemeinen Formel I nicht für eine CH₃ -Gruppe.

Als Substituenten eignen sich grundsätzlich alle Substituenten, welche die mit Hilfe der β-Diketone erreichten Wirkungen hinsichtlich Stabilisierung und Verarbeitungseigenschaften der zu stabilisierenden Polymeren nicht oder nicht mehr als tolerierbar nachteilig beeinflussen. Geeignete Substituenten sind beispielsweise OH-Gruppen, Ketogruppen, Halogenatome wie F, Cl oder Br, Alkylgruppen, Cycloalkylgruppen oder Arylgruppen. Geeignete Verbindungen, die unter die allgemeine Formel I fallen und im Rahmen der vorliegenden Erfindung einsetzbar sind, sind beispielsweise Propionylacetylmethan, Butyroylacetylmethan, Pentanoylacetylmethan, Hexanoylacetylmethan, Heptanoylacetylmethan, Triacetylmethan, Benzoylacetylmethan, Dimedon, Acetyltetralon, Palmitoyltetralon, Stearoyltetralon, Benzoyltetralon, 2-Acetylcyclohexanon, 2-Benzoylcyclohexanon, 2-Acetylcyclohexanon-1,3-dion, Bis(4-methylbenzoyl)methan, Bis(2-hydroxybenzoyl)methan, Tribenzoylmethan, Diacetylbenzoylmethan, Stearoylbenzoylmethan, Palmitoylbenzoylmethan, Diacetylbenzoylmethan, Dibenzoylmethan, 4-Methoxybenzoylbenzoylmethan, Bis(3,4-methylendioxybenzoyl)methan, Benzoylacetyloctylmethan, Benzoylacetylphenylmethan, Stearoyl-4-methoxybenzoylmethan, Bis(4-tert.-butylbenzoyl)methan, Benzoylacetylethylmethan, Benzoyltriflouracetylmethan, Distearoylmethan, Stearoylacetylmethan, Palmitoylacetylmethan, Lauroylacetylmethan, Benzoylformylmethan, Acetylformylmethylmethan, Benzoylacetylphenylmethan, Bis(cyclohexanoyl(2))methan und dergleichen. Diacetylmethan (Acetylaceton) kann im rahmen derben angegebenen Grenzen in einer erfindungsgemäßen Stabilisatorzusammensetzungen vorliegen. Vorzugsweise ist der Anteil an Acetylaceton oder dessen Salzen in einer erfindungsgemäßen Stabilisatorzusammensetzungen jedoch möglichst gering, besonders bevorzugt ist es wenn die erfindungsgemäße Stabilisatorzusammensetzungen im Wesentlichen frei ist von Acetylaceton.

Als Salze dieser Verbindungen eignen sich beispielsweise die Salze mit Alkalimetallen, Erdalkalimetallen oder geeigneten Übergangsmetallen. Geeignete Salze sind beispielsweise die Salze der o.g. Verbindungen mit Li, Na, K, Ba, Ca, Mg, Zn, Zr, Ti, Sn oder A1. Unter den Salzen der Verbindungen der allgemeinen Formel I bevorzugt sind insbesondere die Salze mit Ca oder Zn oder deren Gemische.

Erfindungsgemäß geeignete β-Diketone sind beispielsweise Stearoylbenzoylmethan, Dibenzoylmethan oder kommerziell erhältliche β-Diketone wie P24 (Fa. Akcross) oder Gemische aus zwei oder mehr davon.

Besonders bevorzugt sind dabei im Rahmen der vorliegenden Erfindung die Salze von β-Diketonen mit einem Schmelzpunkt von weniger als etwa 150 °C, insbesondere mit einem Schmelzpunkt von weniger als etwa 120 °C, beispielsweise etwa weniger als etwa 80 °C, weniger als etwa 60 °C oder etwa 50 °C oder weniger.

Die Komponente B ist in einer erfindungsgemäßen Stabilisatorzusammensetzung vorzugsweise in einer Menge von etwa 0,01 bis etwa 2 phr, bezogen auf das zu stabilisierende thermoplastische Harz oder die zu stabilisierenden thermoplastischen Harze, enthalten. Besonders geeignete Mengen liegen beispielsweise innerhalb eines Bereichs von etwa 0,03 bis etwa 1,5 phr oder etwa 0,05 bis etwa 1,2 phr oder etwa 0,08 bis etwa 1 phr oder etwa 0,1 bis etwa 0,9 phr oder etwa 0,15 bis etwa 0,8 phr oder etwa 0,2 bis etwa 0,7 phr. Der Gehalt an Komponente B beträgt vorzugsweise etwa 0,2 bis 0,6 phr, beispielsweise etwa 0,3 bis etwa 0,55 phr, bezogen auf das zu stabilisierende halogenhaltige thermoplastische Harz oder die zu stabilisierenden halogenhaltigen thermoplastischen Harze.

Im Rahmen einer weiteren bevorzugten Ausführungsform der vorliegenden Erfindung enthält eine erfindungsgemäße Stabilisatorzusammensetzung Calciumacetylacetonat oder Zinkacetylacetonat oder deren Gemisch in einer Menge von weniger als etwa 0,3 phr, bezogen auf die zu stabilisierenden thermoplastischen Harze. Besonders bevorzugte Mengen für den Gehalt an Ca-Acetylacetonat oder Zn-Acetylacetonat oder deren Gemisch liegen beispielsweise bei weniger als etwa 0,1 phr oder weniger als etwa 0,05 oder weniger als etwa 0,01 oder weniger als etwa 0,005 oder weniger als etwa 0,001 phr, beispielsweise bei weniger als etwa 0,001 oder weniger als etwa 0,0001 phr, bezogen auf das zu stabilisierende, halogenhaltige Polymere.

Neben den Komponenten A und B enthält eine erfindungsgemäße Stabilisatorzusammensetzung mindestens noch eine weitere Verbindung. Es hat sich erfindungsgemäß als vorteilhaft herausgestellt, wenn zur Verbesserung der Stabilisierungswirkung eine erfindungsgemäße Stabilisatorzusammensetzung mindestens ein Hydroxylgruppen tragendes Isocyanurat als Komponente C enthält.

Grundsätzlich eignen sich im Rahmen der vorliegenden Erfindung als Komponente C alle Isocyanurate, die mindestens eine OH-Gruppe aufweisen. Im Rahmen einer bevorzugten Ausführungsform der vorliegenden Erfindung werden jedoch Isocyanurate eingesetzt, die mindestens zwei OH-Gruppen enthalten. Besonders bevorzugt ist im Rahmen der vorliegenden Erfindung jedoch der Einsatz von Isocyanuraten, die drei OH-Gruppen aufweisen.

Im Rahmen einer besonders bevorzugten Ausführungsform der vorliegenden Erfindung wird das hydroxylgruppenhaltige Isocyanurat aus Verbindungen der allgemeinen Formel (II) 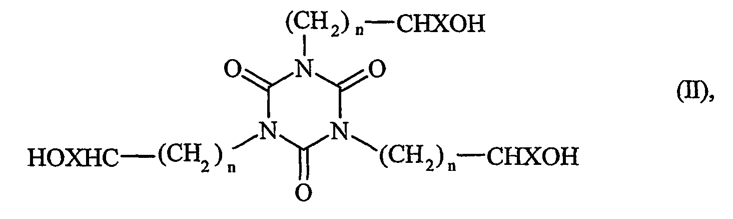 worin die Gruppen X und die Indices n gleich oder verschieden sind und n für eine ganze Zahl von 0 bis 5 und X für ein Wasserstoffatom oder für eine lineare oder verzweigte Alkylgruppe mit 1 bis 6 Kohlenstoffatomen steht, ausgewählt.

Besonders bevorzugt sind dabei Tris(hydroxyethyl)isocyanurat (im folgenden als THEIC bezeichnet) sowie gehinderte phenolische Isocyanurate gemäß der EP 0 685 516 B1, auf deren Offenbarung hinsichtlich entsprechender gehinderter phenolischer Isocyanurate ausdrücklich Bezug genommen wird und deren solche Isocyanurate betreffende Offenbarung als Bestandteil der Offenbarung des vorliegenden Textes verstanden wird.

Die Komponente C ist in einer erfindungsgemäßen Stabilisatorzusammensetzung vorzugsweise in einer Menge von etwa 0,01 bis etwa 3 phr, bezogen auf das zu stabilisierende thermoplastische Harz oder die zu stabilisierenden thermoplastischen Harze, enthalten. Besonders geeignete Mengen liegen beispielsweise innerhalb eines Bereichs von etwa 0,03 bis etwa 2 phr oder etwa 0,05 bis etwa 1,5 phr oder etwa 0,06 bis etwa 1 phr oder etwa 0,07 bis etwa 0,8 phr oder etwa 0,08 bis etwa 0,59 phr oder etwa 0,09 bis etwa 0,5 phr oder etwa 0,1 bis etwa 0,3 phr.

Der Gehalt der Stabilisatorzusammensetzung an den Komponenten A, B und C beträgt, bezogen auf die gesamte Stabilisatorzusammensetzung, etwa 0,5 bis etwa 80 Gew.-%. Vorzugsweise beträgt der Gehalt an den Komponenten A, B und C in einem solchen Falle etwa 1 bis etwa 65 Gew.-%, beispielsweise etwa 5 bis etwa 50 Gew.-%.

Der Anteil an Komponente A liegt in der Stabilisatorzusammensetzung beispielsweise innerhalb eines Bereichs von etwa 0,1 bis etwa 30 Gew.-% oder etwa 1 bis etwa 25 Gew.-% oder etwa 3 bis etwa 20 Gew-% oder etwa 5 bis etwa 15 Gew.-% oder etwa 7 bis etwa 12 Gew.-% oder etwa 8 bis etwa 11 Gew.-%, jeweils bezogen auf das Gesamtgewicht der Stabilisatorzusammensetzung, vor.

Der Anteil an Komponente B liegt in der Stabilisatorzusammensetzung beispielsweise innerhalb eines Bereichs von etwa 0,01 bis etwa 30 Gew.-% oder etwa 0,1 bis etwa 28 Gew.-% oder etwa 0,5 bis etwa 22 Gew.-% oder etwa 1 bis etwa 20 Gew.-% oder etwa 2 bis etwa 18 Gew-%, jeweils bezogen auf das Gesamtgewicht der Stabilisatorzusammensetzung, vor.

Der Anteil an Komponente C liegt in der Stabilisatorzusammensetzung beispielsweise innerhalb eines Bereichs von etwa 0,01 bis etwa 30 Gew.-% vor oder etwa 0,1 bis etwa 20 Gew.-% oder etwa 0,5 bis etwa 15 Gew.-% oder etwa 1 bis etwa 12 Gew.-% oder etwa 2 bis etwa 10 Gew.-% oder etwa 2,5 bis etwa 9,9 Gew.-% oder etwa 2,75 bis 8 Gew.-% oder etwa 3 bis etwa 7 Gew.-% oder etwa 3,5 bis 6,5 Gew.-%, jeweils bezogen auf das Gesamtgewicht der Stabilisatorzusammensetzung, vor.

Hinsichtlich der Stabilisierungswirkung eine erfindungsgemäße Stabilisatorkombinationen hat sich als vorteilhaft herausgestellt, wenn man ein bestimmtes Verhältnis von eingehalten wird. So sollte beispielsweise im Rahmen der vorliegenden Erfindung im Rahmen einer bevorzugten Ausführungsform das Verhältnis von β-Diketonen zu Verbindungen der Komponente C mindestens 1, vorzugsweise mehr als 1 betragen. Besonders geeignete Verhältnisse liegen beispielsweise innerhalb eines Bereichs von etwa 1 bis etwa 2, insbesondere etwa 1,1 bis etwa 1,5 oder etwa 1,2 bis etwa 1,45 oder etwa 1,3 bis etwa 1,4.

Eine erfindungsgemäße Stabilisatorzusammensetzung erfüllt vorzugsweise eine oder mehrere der folgenden Bedingungen:
(i) der Gehalt an Komponente A beträgt 0,01 bis 0,8 phr, bezogen auf das zu stabilisierende thermoplastische Harz oder die zu stabilisierenden thermoplastischen Harze,
(ii) der Gehalt an Komponente B beträgt 0,01 bis 0,6 phr, bezogen auf das zu stabilisierende thermoplastische Harz oder die zu stabilisierenden thermoplastischen Harze,
(iii) der Gehalt an Komponente C beträgt 0,01 bis 0,59 phr, bezogen auf das zu stabilisierende thermoplastische Harz oder die zu stabilisierenden thermoplastischen Harze
(iv) der Gehalt an Komponente A beträgt 0,1 bis 12 Gew.-%, bezogen auf das Gesamtgewicht der Stabilisatorzusammensetzung,
(v) der Gehalt an Komponente B beträgt 0,1 bis 18 Gew.-%, bezogen auf das Gesamtgewicht der Stabilisatorzusammensetzung,
(vi) der Gehalt an Komponente C beträgt 0,1 bis 15 Gew.-%, bezogen auf das Gesamtgewicht der Stabilisatorzusammensetzung,
(vii) das Gewichtsverhältnis von Komponente B zu Komponente C ist größer als 1.

Während ein Gehalt einer erfindungsgemäßen Stabilisatorzusammensetzung an den oben genannten Komponenten A, B und C vorzugsweise innerhalb der oben genannten Grenzen bereits zu guten Stabilisierungsergebnissen bei einer überraschend guten Lagerstabilität führt, hat es sich hinsichtlich einer Verbesserung der Stabilisierungswirkung weiterhin als vorteilhaft herausgestellt, wenn die erfindungsgemäße Stabilisatorzusammensetzung einen Hydrotalcit oder ein Gemisch aus zwei oder mehr Hydrotalciten enthält.

Grundsätzlich ist dabei im Rahmen der vorliegenden Erfindung jede Art von Hydrotalciten geeignet, die hinsichtlich der Verarbeitungseigenschaften und/oder der Stabilisierung eines halogenhaltigen Polymeren im Rahmen einer erfindungsgemäßen Stabilisatorzusammensetzungen zumindest keinen oder jedenfalls im wesentlichen keinen nachteiligen Einfluss zeigt. Darüber hinaus sind besonders solche Hydrotalcite bevorzugt, welche die Lagerstabilität einer erfindungsgemäßen Stabilisatorzusammensetzung nicht nachteilig beeinflussen. Besonders geeignet sind beispielsweise Hydrotalcite wie sie in den Druckschriften WO 96/02465 A1 (insbesondere S. 3 bis 7 und Beispiele), EP 0 189 899 (insbesondere S. 10 - 15, Tabellen 2 bis 10), DE 38 43 581 (insbesondere S. 4), US 4,883,533 (insbesondere Sp. 2 - 4, Beispiele), EP 0 407 139 A2 (insbesondere S. 2 - 3, Beispiele), DE 40 31 818 A1 (insbesondere S. 2 - 3), DE 41 10 835 A1 (insbesondere Sp. 2 - 5, Beispiele), DE 41 17 034 A1 (insbesondere S. 2 - 6, Beispiele), EP 0 522 810 A2 (insbesondere S. 2 - 3), DE 44 39 934 A1 (insbesondere S. 2 - 3, Beispiele) und US 5,352,723 (insbesondere Sp. 2 - 3, Beispiele) beschrieben werden. Auf die Offenbarung der oben genannten Druckschriften, insbesondere auf die Offenbarung an den genannten Stellen wird dabei ausdrücklich verwiesen, wobei die entsprechende Offenbarung der Druckschriften als Bestandteil der Offenbarung des vorliegenden Texts verstanden wird.

Es hat sich weiterhin als vorteilhaft herausgestellt, wenn eine erfindungsgemäße Stabilisatorzusammensetzung mindestens ein Zinksalz, vorzugsweise ein Zinksalz einer organischen Carbonsäure enthält. Besonders vorteilhaft ist in diesem Zusammenhang jedoch, wenn eine erfindungsgemäße Stabilisatorzusammensetzung ein Gemisch aus mindestens einem Zinksalz einer organischen Carbonsäure mit 16 C-Atomen oder mehr und mindestens einem Zinksalz einer organischen Carbonsäure mit weniger als 16 C-Atomen enthält.

Geeignete organischen Carbonsäuren sind beispielsweise Capronsäure, Caprylsäure, Caprinsäure, Laurinsäure, Myristinsäure, Önanthsäure, Octansäure, Neodecansäure, 2-Ethylhexansäure, Pelargonsäure, Decansäure, Undecansäure, Dodecansäure, Tridecansäure, Palmitinsäure, Laurylsäure, Linolsäure, Linolensäure, Erucasäure, Isostearinsäure, Stearinsäure, 12-Hydroxystearinsäure, 9,10-Dihydroxystearinsäure, Ölsäure, 3,6-Dioxaheptansäure, 3,6,9-Trioxadecansäure oder Behensäure.

Vorteilhafterweise beträgt das Verhältnis von Zn-Salz oder Gemisch aus zwei odermehr Zn-Salzen von Carbonsäuren mit 16 C-Atomen oder mehr zu Zn-Salz oder einemGemisch aus zwei oder mehr Zn-Salzen von Carbonsäuren mit weniger als 16 C Atomen etwa 1 : 100 bis etwa 100 : 1, insbesondere etwa 1:10 bis etwa 10 : 1.

Im Rahmen einer bevorzugten Ausführungsform der vorliegenden Erfindung enthält eine erfindungsgemäße Stabilisatorzusammensetzung ein Gemisch aus Zinkstearat und mindestens einem weiteren organischen Zinksalz, wobei das mindestens eine weitere organische Zn-Salz vorzugsweise ein Zn-Salz einer organischen Carbonsäure mit weniger als 16 C-Atomen ist. Ein besonders bevorzugtes Gemisch stellt dabei ein Gemisch aus Zn-Stearat und Zn-Caprylat oder ein Gemisch aus Zn-Stearat und Zn-12-oxystearat oder ein Gemisch aus Zn-Stearat und Zn-Caprylat und Zn-12-oxystearat dar.

Vorzugsweise beträgt der Anteil eines Gemischs aus zwei oder mehr der oben genannten Zn-Salzen an der erfindungsgemäßen Stabilisatorzusammensetzung etwa 0,1 bis etwa 5 phr, bezogen auf die Menge an zu stabilisierendem halogenhaltigen Polymeren, beispielsweise etwa.0,2 bis etwa 2 phr oder etwa 0,8 bis etwa 1,2 phr.

Es hat sich weiterhin für die Verarbeitungs- und Stabilisierungseigenschaften der vorliegenden erfindungsgemäßen Stabilisatorzusammensetzung als vorteilhaft herausgestellt, wenn die Stabilisatorzusammensetzungen ein Triglycerid enthält. Geeignete Triglyceride sind diesem Zusammenhang alle Triglyceride welche die Verarbeitungseigenschaften einer Polymerzusammensetzung, welche eine erfindungsgemäße Stabilisatorzusammensetzung enthält, zumindest nicht nachteilig beeinflussen.

Geeignete Triglyceride sind beispielsweise natürliche oder synthetische Fette. Es hat sich erfindungsgemäß herausgestellt, dass die Verwendung von Triglyceriden zusammen mit den oben genannten Verbindungen in einer erfoindungsgemäßen Stabilisatorzusammensetzung zu einer Verbesserung der Oberflächenstruktur bei der Extrusion führt. Weitere vorteilhafte Effekte sind eine gute Hydrolysebeständigkeit, schnelle Gelierung, Bindungsfähigkeit für große Mengen an Füllstoffen, kein plate-out Effekt.

Besonders geeignet sind dabei Glycerinstearate wie gereinigter Rindertalg, gehärteter Rindertalg, gereinigtes bzw. gehärtetes Fischöl oder Glycerin(tri-12-hydroxystearate) wie gehärtetes Rizinusöl oder Gemische aus zwei oder mehr der genannten Verbindungen. Besonders geeignet sind gehärteter Rindertalg bzw. gehärtetes Rizinusöl.

Die erfindungsgemäße Stabilsiatorkombination kann zusätzlich mindestens einen weiteren Zusatzstoff oder ein Gemisch aus zwei oder mehr der genannten Zusatzstoffe enthalten. Die nachfolgend genannten Zusatzstoffe können erfindungsgemäß in einer Menge von insgesamt etwa 2 bis etwa 99,9 Gew.-%, bezogen auf die gesamte Stabilisatorzusammensetzung, enthalten sein. Vorzugsweise enthält eine erfindungsgemäße Stabilisatorzusammensetzung insgesamt etwa 0,1 bis etwa 2 phr an Komponenten A, B und C.

Ebenfalls als Zusatzstoffe geeignet sind beispielsweise weitere Aminoalkohole. Als Aminoalkohole sind im Rahmen der vorliegende Erfindung grundsätzlich alle Verbindungen geeignet, die mindestens eine OH-Gruppe und eine primäre, sekundäre oder tertiäre Aminogruppe oder eine Kombination aus zwei oder mehr der genannten Aminogruppen aufweisen. Grundsätzlich sind im Rahmen der vorliegenden Erfindung sowohl feste als auch flüssige Aminoalkohole als Bestandteil der erfindungsgemäßen Stabilisatorzusammensetzungen geeignet. Im Rahmen der vorliegenden Erfindung wird der Anteil an flüssigen Aminoalkoholen jedoch beispielsweise so gewählt, dass die gesamte Stabilisatorzusammensetzung im wesentlichen in fester Form vorliegt.

Im Rahmen der vorliegenden Erfindung einsetzbare Aminoalkohole weisen im Rahmen einer bevorzugten Ausführungsform der vorliegenden Erfindung einen Schmelzpunkt von mehr als etwa 30 °C, insbesondere mehr als etwa 50 °C auf. Geeignete Aminoalkohole sind beispielsweise Mono- oder Polyhydroxyverbindungen die auf linearen oder verzweigten, gesättigten oder ungesättigten aliphatischen Mono- oder Polyaminen aufbauen.

Hierzu geeignet sind beispielsweise OH-Gruppen tragende Derivate primärer Mono- oder Polyaminoverbindungen mit 2 bis etwa 40, beispielsweise 6 bis etwa 20 C-Atomen. Beispielsweise sind dies entsprechende OH-Gruppen tragende Derivate von Ethylamin, n-Propylamin, i-Propylamin, n-Propylamin, sek.-Propylamin, tert.-Butylamin, 1-Aminoisobutan, substituierten Aminen mit zwei bis etwa 20 C-Atomen wie 2-(N,N-Dimethylamino)-1-aminoethan. Geeignete OH-Gruppen tragende Derivate von Diaminen sind beispielsweise solche, die auf Diaminen mit einem Molekulargewicht von etwa 32 bis etwa 200 g/mol aufbauen, wobei die entsprechenden Diamine mindestens zwei primäre, zwei sekundäre oder eine primäre und eine sekundäre Aminogruppe aufweisen. Beispiele hierfür sind Diaminoethan, die isomeren Diaminopropane, die isomeren Diaminobutane, die isomeren Diaminohexane, Piperazin, 2,5-Dimethylpiperazin, Amino-3-aminomethyl-3,5,5-trimethylcyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie die Diethylentriamin oder 1,8-Diamino-4-aminomethyloctan. Triethylamin, Tributylamin, Dimethylbenzylamin, N-Ethyl-, N-Methyl-, N-Cyclohexylmorpholin, Dimethylcyclohexylamin, Dimorpholinodiethylether, 1,4-Diazabicyclo[2,2,2]octan, 1-Azabicyclo[3,3,0]octan, N,N,N',N'-Tetramethylethylendiamin, N,N,N',N'-Tetramethylbutandiamin, N,N,N',N'-Tetramethylhexandiamin-1,6, Pentamethyldiethylentriamin, Tetramethyldiaminoethylether, Bis-(dimethylaminopropyl)-harnstoff, N,N'-Dimethylpiperazin, 1,2-Dimethylimidazol oder Di-(4-N,N-dimethylaminocyclohexyl)-methan.

Besonders geeignet sind aliphatische Aminoalkohole mit 2 bis etwa 40, vorzugsweise 6 bis etwa 20 C-Atomen, beispielsweise 1-Amino-3,3-dimethyl-pentan-5-ol, 2-Aminohexan-2',2"-diethanolamin, 1-Amino-2,5-dimethylcyclohexan-4-ol- 2-Aminopropanol, 2-Aminobutanol, 3-Aminopropanol, 1-Amino-2-propanol, 2-Amino-2-methyl-1-propanol, 5-Aminopentanol, 3-Aminomethyl-3,5,5-trimethylcyclohexanol, 1-Amino-1-cyclopentanmethanol, 2-Amino-2-ethyl-1,3-propandiol, 2-(Dimethylaminoethoxy)-ethanol, aromatisch-aliphatische oder aromatisch-cycloaliphatische Aminoalkohole mit 6 bis etwa 20 C-Atomen, wobei als aromatische Strukturen heterocyclische oder isocyclische Ringsysteme wie Naphthalin- oder insbesondere Benzolderivate wie 2-Aminobenzylalkohol, 3-(Hydroxymethyl)anilin, 2-Amino-3-phenyl-1-propanol, 2-Amino-1-phenylethanol, 2-Phenylglycinol oder 2-Amino-1-phenyl-1,3-propandiol sowie Gemische aus zwei oder mehr solcher Verbindungen in Betracht kommen.

Ebenfalls als Zusatzstoffe im Rahmen der vorliegenden Erfindung geeignet sind Verbindungen mit einem Strukturelement der allgemeinen Formel III 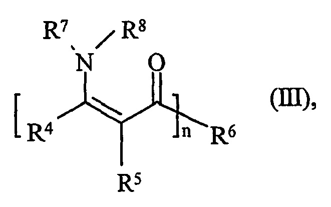 worin n für eine Zahl von 1 bis 100.000, die Reste R⁷, R⁸, R⁴ und R⁵ jeweils unabhängig voneinander für Wasserstoff, einen gegebenenfalls substituierten linearen oder verzweigten, gesättigten oder ungesättigten aliphatischen Alkylrest mit 1 bis 44 C-Atomen, einen gegebenenfalls substituierten gesättigten oder ungesättigten Cycloalkylrest mit 6 bis 44 C-Atomen oder einen gegebenenfalls substituierten Arylrest mit 6 bis 44 C-Atomen oder einen gegebenenfalls substituierten Aralkylrest mit 7 bis 44 C-Atomen stehen oder der Rest R⁴ für einen gegebenenfalls substituierten Acylrest mit 2 bis 44 C-Atomen steht oder die Reste R⁴ und R⁵ zu einem aromatischen oder heterocyclischen System verbunden sind und worin der Rest R⁶ für Wasserstoff, einen gegebenenfalls substituierten, linearen oder verzweigten, gesättigten oder ungesättigten aliphatischen Alkyl- oder Alkylenrest oder Oxyalkyl- oder Oxyalkylenrest oder Mercaptoalkyl- oder Mercaptoalkylenrest oder Aminoalkyl- oder Aminoalkylenrest mit 1 bis 44 C-Atomen, einen gegebenenfalls substituierten gesättigten oder ungesättigten Cycloalkyl- oder Cycloalkylenrest oder Oxycycloalkyl- oder O-xycycloalkylenrest oder Mercaptocycloalkyl- oder Mercaptocycloalkylenrest oder Aminocycloalkyl- oder Aminocycloalkylenrest mit 6 bis 44 C-Atomen oder einen gegebenenfalls substituierten Aryl- oder Arylenrest mit 6 bis 44 C-Atomen oder einen Ether- oder Thioetherrest mit 1 bis 20 O- oder S-Atomen oder O- und S-Atomen oder für ein Polymeres, das über O, S, NH, NR⁴ oder CH₂C(O) mit dem in Klammern stehenden Strukturelement verbunden ist, steht oder der Rest R⁶ mit dem Rest R⁴ so verbunden ist, dass insgesamt ein gegebenenfalls substituiertes, gesättigtes oder ungesättigtes heterocyclisches Ringsystem mit 4 bis 24 C-Atomen gebildet wird, oder ein Gemisch aus zwei oder mehr Verbindungen der allgemeinen Formel III, enthalten.

Im Rahmen einer bevorzugten Ausführungsform der vorliegenden Erfindung wird als Verbindung der allgemeinen Formel III eine auf einer α,β-ungesättigten β-Aminocarbonsäure, insbesondere eine auf β-Aminocrotonsäure basierende Verbindung eingesetzt. Besonders geeignet sind hierbei die Ester oder Thioester der entsprechenden Aminocarbonsäuren mit einwertigen oder mehrwertigen Alkoholen oder Mercaptanen.

Eine genaue Beschreibung der im Rahmen der vorliegenden Erfindung einsetzbaren Verbindungen der allgemeinen Formel III findet sich in der WO 02/068526 auf den Seiten 7 bis 10, wobei auf diese Druckschrift sowie die entsprechende Offenbarung ausdrücklich verwiesen wird und die Offenbarung als Bestandteil der Offenbarung des vorliegenden Textes betrachtet wird.

Ebenfalls als Zusatzstoffe geeignet sind Verbindungen mit mindestens einem mercaptofunktionellen sp²-hybridisierten C-Atom, wie sie in der WO 02/068526 auf den Seiten 10 bis 11 beschrieben werden. Auf diese Druckschrift sowie die entsprechende Offenbarung wird ausdrücklich verwiesen und die Offenbarung wird als Bestandteil der Offenbarung des vorliegenden Textes betrachtet.

Eine erfindungsgemäße Stabilisatorzusammensetzung kann weiterhin Füllstoffe, wie sie im "Handbook of PVC Formulating", E. J. Wickson, John Wiley & Sons, Inc., 1993, auf den Seiten 393-449 beschrieben sind, oder Verstärkungsmittel, wie sie im "Taschenbuch der Kunststoffadditive", R. Gächter/H. Müller, Carl Hanser Verlag, 1990, Seiten 549-615 beschrieben sind, oder Pigmente enthalten.

Ebenfalls als Zusatzstoffe geeignet sind Salze halogenhaltiger Oxysäuren, insbesondere Perchlorat. Beispiele für geeignete Perchlorate sind diejenigen der allgemeinen Formel M(ClO₄)ₙ, wobei M für Li, Na, K, Mg, Ca, Sr, Zn, Al, La oder Ce steht. Der Index n steht entsprechend der Wertigkeit von M für die Zahl 1, 2 oder 3. Die genannten Perchloratsalze können mit Alkoholen (Polyole, Zyklodextrine) oder Etheralkoholen beziehungsweise Esteralkoholen komplexiert sein. Zu den Esteralkoholen sind auch die Polyolpartialester zu zählen. Bei mehrwertigen Alkoholen oder Polyolen kommen auch deren Dimere, Trimere, Oligomere und Polymere in Frage, wie Di-, Tri-, Tetra- und Polyglykole sowie Di-, Tri- und Tetrapentaerythrit oder Polyvinylalkohol in verschiedenen Polymerisations- und Verseifungsgraden. Als Polyolpartialester sind Glycerinmonoether und Glycerinmonothioether bevorzugt. Ebenfalls geeignet sind Zuckeralkohole oder Thiozucker.

Die Perchloratsalze können dabei in verschiedenen gängigen Darreichungsformen eingesetzt werden, beispielsweise als Salz oder wässrige Lösung, aufgezogen auf ein geeignetes Trägermaterial wie PVC, Calciumsilikat, Zeolithe, Calciumhydroxid, Calciumoxid oder Hydrotalcite oder eingebunden durch chemische Reaktion in einen Hydrotalcit. Hinsichtlich auf Calciumoxid oder Calciumhydroxid aufgezogener Perchloratverbindungen wird ausdrücklich auf die DE 101 24 734 A1 verwiesen, wobei die Offenbarung dieser Druckschrift hinsichtlich geträgerter Perchlorate als Bestandteil der Offenbarung des vorliegenden Textes betrachtet wird.

Ebenfalls als Zusatzstoffe geeignet sind beispielsweise basische Calcium-Aluminium-Hydroxyphosphite der allgemeinen Formel (IV)

CaₓAl₂(OH)_{2(x+3-y)}(HPO₃)_{y} * m H₂O (IV),

worin 2 ≤ x ≤12, (2x+5)/2 > y > 0 und 0 ≤ m ≤ 12 gilt. Verbindungen der allgemeinen Formel (IV) werden z. B. in der DE 41 06 411 A beschrieben. Weitere basische Calcium-Aluminium-Hydroxyphosphite werden in DE- A- 3941902 beschrieben. Auf die Offenbarung der genannten Druckschriften hinsichtlich basischer Calcium-Aluminium-Hydroxyphosphite wird ausdrücklich verwiesen. Die Offenbarung wird als Bestandteil der Offenbarung des vorliegenden Textes betrachtet.

Ebenfalls als Zusatzstoffe im Rahmen der erfindungsgemäßen Stabilisatorzusammensetzungen geeignet sind basische Calcium-Aluminium-Hydroxycarboxylaten der allgemeinen Formel V

CaₓAl₂(OH)_{[(2x+6)-y]}A_{y/n}ⁿ⁻ * m H₂O (V),

worin 2 ≤ x ≤ 12, (2x+5)/2 > y > 0, 0 ≤ m ≤ 12 und 1 ≤ n ≤ 8 gilt, und Aⁿ⁻ für ein aliphatisches gesättigtes, ungesättigtes, geradkettiges oder verzweigtes ein- oder mehrfunktionelles Carbonsäureanion mit 1 bis 22 Kohlenstoffatomen oder für ein aromatisches oder heteroaromatisches ein- oder mehrfunktionells Carbonsäureanion mit 6 bis 20 Kohlenstoffatomen steht.

Das Carbonsäureanion Aⁿ⁻ in der allgemeinen Formel (V) kann beispielsweise ausgewählt werden aus Anionen der Malon-, Bernstein-, Adipin-, Fumar-, Malein-, Phthal-, Isophthal-, Terephthal-, Pyridin-, Benzoe-, Salicyl-, Tartron-, Äpfel-, Wein-, Acetondicarbon-, Oxalessig-, Aconit- und Zitronensäure. Bevorzugt sind die Anionen der Fumar- und Phthalsäure, insbesondere werden Fumarate eingesetzt.

Verbindungen der allgemeinen Formel (V) sind z.B. aus DE 41 06 404 A bekannt. Weitere Calcium-Aluminium-Hydroxicarboxylate werden in DE 40 02 988 A beschrieben, wobei auf die Offenbarung dieser Druckschriften hinsichtlich der genannten Calcium-Aluminium-Hydroxycarboxylate ausdrücklich hingewiesen wird und deren Offenbarung als Bestandteil der Offenbarung des vorliegenden Textes gilt.

Weiterhin als Zusatzstoffe im Rahmen der erfindungsgemäßen Stabilisatorzusammensetzung geeignet sind Polyole. Geeignete Polyole sind beispielsweise Pentaerythrit, Dipentaerythrit, Tripentaerythrit, Bistrimethylolpropan, Inosit, Polyvinylalkohol, Bistrimetylolethan, Trimethylolpropan, Sorbit, Maltit, Isomaltit, Lactit, Lycasin, Mannit, Lactose, Leucrose, Tris-(hydroxyethyl)isocyanurat, Palatinit, Tetramethylolcyclohexanol, Tetramethylolcyclopentanol, Tetramethylolcycloheptanol, Glyzerin, Diglyzerin, Polyglyzerin, Thiodiglyzerin oder 1-0-α-D-Glycopyranosyl-D-mannit-dihydrat.

Ebenfalls als Zusatzstoffe geeignet sind beispielsweise Epoxyverbindungen. Beispiele für derartige Epoxyverbindungen sind epoxidiertes Sojaöl, epoxidiertes Olivenöl, epoxidiertes Leinöl, epoxidiertes Rizinusöl, epoxidiertes Erdnussöl, epoxidiertes Maisöl, epoxidiertes Baumwollsamenöl sowie Glycidylverbindungen. Als Glycidylverbindungen eignen sich insbesondere die Glycidylverbindungen wie sie in der WO 02/068526 auf den Seiten 20 bis 22 beschrieben werden. Auf die Offenbarung der genannten Druckschrift hinsichtlich der Glycidylverbindungen wird ausdrücklich verwiesen und sie wird als Bestandteil der Offenbarung des vorliegenden Textes betrachtet.

Besonders geeignete Epoxyverbindungen sind beispielsweise in der EP-A 1 046 668 auf den Seiten 3 bis 5 beschrieben, wobei auf die dort enthaltene Offenbarung ausdrücklich Bezug genommen wird und die als Bestandteil der Offenbarung des vorliegenden Textes betrachtet wird.

Weiterhin als Zusatzstoffe geeignet sind beispielsweise Zeolithe, die durch die allgemeine Formel Mₓⁿ[(AlO₂)ₓ(SiO₂)_{y}] * m H₂O beschrieben werden können, worin n für die Ladung des Kations M (z.B. Alkali - oder Erdalkalimetall) steht, 0,8 ≤ x, y ≤ 15 und 0 ≤ m ≤ 300 gilt.

Ebenfalls als Zusatzstoffe geeignet sind beispielsweise sterisch gehinderte Amine wie sie in der EP-A 1 046 668 auf den Seiten 7 bis 27 genannt werden. Auf die dort offenbarten sterisch gehinderten Amine wird ausdrücklich Bezug genommen, die dort genannten Verbindungen werden als Bestandteil der Offenbarung des vorliegenden Textes betrachtet.

Ebenfalls als Zusatzstoffe geeignet sind Uracile und Aminouracile, wie sie beispielsweise in der EP 1 046 668 genannt werden. Die sich auf Aminouracile beziehende Offenbarung der genannten Druckschrift wird als Bestandteil der Offenbarung des vorliegenden Textes betrachtet.

Weiterhin eignen sich als Zusatzstoffe Aminosäuren und deren Alkali - und Erdalkalisalze.

Ebenfalls als Zusatzstoffe geeignet sind Hydrocalumite der allgemeinen Formel AlCaₓ(OH)₂ₓ₊₃ * m H₂O; x = 1 bis 4; m = 0 bis 8, die beispielsweise in der DE 41 03 881 beschrieben werden. Auf die genannte Druckschrift und deren Offenbarung hinsichtlich der genannten Hydrocalumite wird ausdrücklich Bezug genommen und die Offenbarung wird als Bestandteil der Offenbarung des vorliegenden Textes betrachtet.

Eine erfindungsgemäße Stabilisatorzusammensetzung kann darüber hinaus weiterhin als Zusatzstoff eine Organozinnverbindung oder ein Gemisch aus zwei oder mehr Organozinnverbindungen enthalten. Geeignete Organozinnverbindungen sind beispielsweise Methylzinn-tris-(isooctyl-thioglycolat), Meihylzinn-tris-(isooctyl-3-mercaptopropionat), Methylzinn-tris-(isodecyl-thioglycolat), Dimethylzinn-bis-(isooctyl-thioglycolat), Dibutylzinn-bis-(isooctyl-thioglycolat), Monobutylzinn-tris-(isooctyl-thioglycolat), Dioctylzinnbis-(isooctyl-thioglycolat), Monooctylzinn-tris-(isooctyl-thioglycolat) oder Dimethylzinnbis-(2-ethylhexyl-β-mercaptopropionat).

Darüber hinaus sind im Rahmen der erfindungsgemäßen Stabilisatorzusammensetzungen die in der EP-A 0 742 259 auf den Seiten bis 18 bis 29 genannten und in ihrer Herstellung beschriebenen Organozinnverbindungen einsetzbar. Auf die oben genannte Offenbarung wird ausdrücklich Bezug genommen, wobei die dort genannten Verbindungen und deren Herstellung als Bestandteil der Offenbarung des vorliegenden Textes verstanden werden. Ebenfalls als Additive geeignet sind latente Mercaptane, wie sie in der EP 0 742 259 A1 und der EP 1 201 706 A1 beschrieben werden, sowie Cyanacetylharnstoffe gemäß der DE 299 24 285 U1, wobei auf die oben genannten Offenbarungsstellen ausdrücklich Bezug genommen wird und die dort genannten Verbindungen und deren Herstellung als Bestandteil der Offenbarung des vorliegenden Textes verstanden werden.

Im Rahmen einer weiteren Ausführungsform der vorliegenden Erfindung kann eine erfmdungsgemäße Stabilisatorzusammensetzung organische Phosphitester mit 1 bis 3 identischen, paarweise identischen oder unterschiedlichen organischen Resten enthalten. Geeignete organische Reste sind beispielsweise lineare oder verzweigte, gesättigte oder ungesättigte Alkylreste mit 1 bis 24 C-Atomen, gegebenenfalls substituierten Alkylreste mit 6 bis 20 C-Atomen oder gegebenenfalls substituierte Aralkylreste mit 7 bis 20 C-Atomen. Beispiele für geeignete organische Phosphitester sind Tris-(nonylphenyl)-, Trilauryl-, Tributyl-, Trioctyl-, Tridecyl-, Tridodecyl-, Triphenyl-, Octyldiphenyl-, Dioctylphenyl-, Tri-(Octylphenyl)-, Tribenzyl-, Butyldikresyl-, Octyl-di(octylphenyl)-, Tris-(2-ethylhexyl)-, Tritolyl-, Tris-(2-cyclohexylphenyl)-, Tri-α-naphthyl-, Tris-(phenylphenyl)-, Tris-(2-phenylethyl)-, Tris-(dimethylphenyl)-, Trikresyl- oder Tris-(p-nonylphenyl)-phosphit oder Tristearyl-sorbit-triphosphit oder Gemische aus zwei oder mehr davon.

Eine erfindungsgemäße Stabilisatorzusammensetzung kann weiterhin Gleitmittel wie Montanwachs, Fettsäureester, Polyethylenwachse, Amidwachse, Chlorparaffine oder Erdalkaliseifen enthalten. Als Zusatzstoffe verwendbare Gleitmittel werden darüber hinaus auch in "Kunststoffadditive", R. Gächter/H. Müller, Carl Hanser Verlag, 3. Auflage, 1989, S. 478 - 488 beschrieben. Weiterhin als Zusatzstoffe geeignet sind beispielsweise Fettketone wie sie in der DE 4,204,887 beschrieben werden sowie Gleitmittel auf Silikonbasis, wie sie beispielsweise die EP-A 0 259 783 nennt, oder Kombinationen davon, wie sie in der EP-A 0 259 783 genannt werden. Auf die genannten Dokumente wird hiermit ausdrücklich Bezug genommen, deren Gleitmittel betreffende Offenbarung wird als Bestandteil der Offenbarung des vorliegenden Textes betrachtet.

Ebenfalls als Zusatzstoffe für Stabilisatorzusammensetzungen gemäß der vorliegenden Erfindung geeignet sind organische Weichmacher.

Als entsprechende Weichmacher geeignet sind beispielsweise die oben im Rahmen der Beschreibung der Lösemittel genannten Verbindungen aus der Gruppe der Phthalsäureester wie Dimethyl-, Diethyl-, Dibutyl-, Dihexyl-, Di-2-ethylhexyl-, Di-n-octyl-, Di-iso-octyl-, Di-iso-nonyl-, Di-iso-decyl-, Dicyclohexyl-, Di-methylcyclohexyl-, Dimethylglykol-, Dibutylglykol-, Benzylbutyl- oder Diphenylphthalat sowie Gemische von Phthalaten, beispielsweise Gemische von Alkylphthalaten mit 7 bis 9 oder 9 bis 11 C-Atomen im Esteralkohol oder Gemische von Alkylphthalaten mit 6 bis 10 und 8 bis 10 C-Atomen im Esteralkohol. Besonders im Sinne der vorliegenden Erfindung geeignet sind dabei Dibutyl-, Dihexyl-, Di-2-ethylhexyl-, Di-n-octyl-, Di-iso-octyl-, Di-iso-nonyl-, Di-iso-decyl-, Di-isotridecyl- und Benzylbutylphthalat sowie die genannten Mischungen von Alkylphthalaten.

Weiterhin als Weichmacher geeignet sind die Ester aliphatischer Dicarbonsäuren, insbesondere die Ester von Adipin-, Azelain- oder Sebacinsäure oder Gemische aus zwei oder mehr davon. Beispiele für derartige Weichmacher sind Di-2-ethylhexyladipat, Diisooctyladipat, Di-iso-nonyladipat, Di-iso-decyladipat, Benzylbutyladipat, Benzyloctyladipat, Di-2-ethylhexylazelat, Di-2-ethylhexylsebacat und Di-iso-decylsebacat. Bevorzugt sind im Rahmen einer weiteren Ausführungsform der vorliegenden Erfindung Di-2-ethylhexylacetat und Di-iso-octyladipat.

Ebenfalls als Weichmacher geeignet sind Trimellithsäureester wie Tri-2-ethylhexyltrimellithat,Tri-iso-tridecyltrimellithat, Tri-iso-octyltrimellithat sowie Trimellithsäureester mit 6 bis 8, 6 bis 10, 7 bis 9 oder 9 bis 11 C-Atomen in der Estergruppe oder Gemische aus zwei oder mehr der genannten Verbindungen.

Weiterhin geeignete Weichmacher sind beispielsweise Polymerweichmacher, wie sie in "Kunststoffadditive", R. Gächter/H. Müller, Carl Hanser Verlag, 3. Auflage, 1989, Kapitel 5.9.6, Seiten 412-415, oder "PVC Technology", W. V. Titow, 4th Edition, Elsevier Publishers, 1984, Seiten 165-170, angegeben sind. Die gebräuchlichsten Ausgangsmaterialien für die Herstellung von Polyesterweichmachern sind beispielsweise Dicarbonsäuren wie Adipin-, Phthal-, Azelain- oder Sebacinsäure sowie Diole wie 1,2-Propandiol, 1,3-Butandiol, 1,4-Butandiol, 1,6-Hexandiol, Neopentylglykol oder Diethylenglykol oder Gemische aus zwei oder mehr davon.

Ebenfalls als Weichmacher geeignet sind Phosphorsäureester, wie sie im "Taschenbuch der Kunststoffadditive", Kapitel 5.9.5, S. 408-412 zu finden sind. Beispiele für geeignete Phosphorsäureester sind Tributylphosphat, Tri-2-ethylbutylphosphat, Tri-2-ethylhexylphosphat, Trichlorethylphosphat, 2-Ethyl-hexyl-di-phenylphosphat, Triphenylphosphat, Trikresylphosphat oder Trixylenylphosphat, oder Gemische aus zwei oder mehr davon.

Weiterhin als Weichmacher geeignet sind chlorierte Kohlenwasserstoffe (Paraffine) oder Kohlenwasserstoffe wie sie in "Kunststoffadditive", R. Gächter/H. Müller, Carl Hanser Verlag, 3. Auflage, 1989, Kapitel 5.9.14.2, S. 422-425 und Kapitel 5.9.14.1, S. 422, beschrieben sind.

Im Rahmen einer weiteren Ausführungsform der vorliegenden Erfindung können die erfindungsgemäßen Stabilisatorzusammensetzungen Antioxidantien, UV-Absorber und Lichtschutzmittel oder Treibmittel enthalten. Geeignete Antioxidantien sind beispielsweise in der EP-A 1 046 668 auf den Seiten 33 bis 35 beschrieben. Geeignete UV-Absorber und Lichtschutzmittel sind dort auf den Seiten 35 und 36 genannt. Auf beide Offenbarungen wird hier ausdrücklich Bezug genommen, wobei die Offenbarungen als Bestandteil des vorliegenden Textes betrachtet werden.

Als Treibmittel eignen sich beispielsweise organische Tetrazole, Oxazine, Isatosäureanhydrid, Salze der Citronensäure, beispielsweise Ammoniumcitrat, sowie Soda und Natriumbicarbonat. Besonders geeignet sind beispielsweise Ammoniumcitrat, Natriumbicarbonat oder deren Gemische.

Eine erfindungsgemäße Stabilisatorzusammensetzung kann darüber hinaus noch Schlagzähmodifikatoren und Verarbeitungshilfen, Geliermittel, Antistatika, Biozide, Metalldesaktivatoren, optische Aufheller, Flammschutzmittel sowie Antifoggingverbindungen enthalten. Geeignete Verbindungen dieser Verbindungsklassen sind beispielsweise in "Kunststoff Additive", R. Keßler/H. Müller, Carl Hanser Verlag, 3. Auflage, 1989 sowie im "Handbook of PVC Formulating", E.J. Wilson, J. Wiley & Sons, 1993 beschrieben.

Eine erfindungsgemäße Stabilisatorzusammensetzung lässt sich grundsätzlich auf beliebige Weise durch Vermischen der einzelnen Komponenten herstellen.

Gegenstand der vorliegenden Erfindung ist daher auch ein Verfahren zur Herstellung einer Stabilisatorzusammensetzung zur Stabilisierung halogenhaltiger thermoplastischer Harze, bei dem
a) Calciumhydroxid oder Calciumoxid oder ein Gemisch aus Calciumhydroxid und Calciumoxid als Komponente A und
b) mindestens ein β-Diketon oder ein Salz eines β-Diketons oder deren Gemisch als Komponente B und
c) mindestens ein hydroxylgruppenhaltiges Isocyanurat oder ein Gemisch aus zwei oder mehr hydroxylgruppenhaltigen Isocyanuraten als Komponente C,
miteinander vermischt werden, wobei Komponente B weniger als 33 Gew.-%, bezogen auf Komponente B, an Acetylaceton oder einem Salz von Acetylaceton oder einem Gemisch davon enthält.

Die erfindungsgemäßen Stabilisatorzusammensetzungen eignen sich zur Stabilisierung halogenhaltiger Polymerer.

Beispiele für derartige halogenhaltige Polymere sind Polymere des Vinylchlorids, Vinylharze, die Vinylchlorideinheiten im Polymerrückgrat enthalten, Copolymere von Vinylchlorid und Vinylestern aliphatischer Säuren, insbesondere Vinylacetat, Copolymere von Vinylchlorid mit Estern der Acryl- und Methacrylsäure oder Acrylnitril oder Gemische aus zwei oder mehr davon, Copolymere des Vinylchlorids mit Dienverbindungen oder ungesättigten Dicarbonsäuren oder deren Anhydriden, beispielsweise Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenchlorids mit ungesättigten Aldehyden, Ketonen und anderen Verbindungen wie Acrolein, Crotonaldehyd, Vinylmethylketon, Vinylmethylether, Vinylisobutylether und dergleichen, Polymere und Copolymere des Vinylidenchlorids mit Vinylchlorid und anderen polymerisierbaren Verbindungen, wie sie bereits oben genannt wurden, Polymere des Vinylchloracetats und Dichlordivinylethers, chlorierte Polymere des Vinylacetats, chlorierte polymere Ester der Acrylsäure und der α-substituierten Acrylsäuren, chlorierte Polystyrole, beispielsweise Polydichlorstyrol, chlorierte Polymere des Ethylens, Polymere und nachchlorierte Polymere von Chlorbutadien und deren Copolymere mit Vinylchlorid sowie Mischungen aus zwei oder mehr der genannten Polymeren oder Polymermischungen, die eines oder mehrere der oben genannten Polymere enthalten. Im Rahmen einer bevorzugten Ausführungsform der vorliegenden Erfindung werden die erfindungsgemäßen Stabilisatorzusammensetzungen zur Herstellung von Formteilen aus PVC-U wie Fensterprofilen, technischen Profilen, Rohren und Platten eingesetzt.

Ebenfalls zur Stabilisierung mit den erfindungsgemäßen Stabilisatorzusammensetzungen geeignet sind die Pfropfpolymerisate von PVC mit EVA, ABS oder MBS. Bevorzugte Substrate für derartige Propfcopolymere sind außerdem die vorstehend genannten Homo- und Copolymerisate, insbesondere Mischungen von Vinylchlorid-Homopolymerisaten mit anderen thermoplastischen oder elastomeren Polymeren, insbesondere Blends mit ABS, MBS, NBR, SAN, EVA, CPE, MBAS, PAA (Polyalkylacrylat), PAMA (Polyalkylmethacrylat), EPDM, Polyamiden oder Polylactonen.

Ebenfalls zur Stabilisierung mit den erfindungsgemäßen Stabilisatorzusammensetzungen geeignet sind Gemische von halogenierten und nicht-halogenierten Polymeren, beispielsweise Gemische der oben genannten nicht-halogenierten Polymeren mit PVC, insbesondere Gemische von Polyurethanen und PVC.

Weiterhin können mit den erfindungsgemäßen Stabilisatorzusammensetzungen auch Rezyklate chlorhaltiger Polymere stabilisiert werden, wobei grundsätzlich alle Rezyklate der oben genannten, halogenierten Polymeren hierzu geeignet sind. Geeignet ist im Rahmen der vorliegenden Erfindung beispielsweise PVC-Rezyklat.

Die erfindungsgemäße Stabilisatorzusammensetzung wird bevorzugt für Polyvinylchlorid (PVC) als halogenhaltiges thermoplastisches Harz verwendet. Beispielsweise wird sie für PVC-U (Hart-PVC) eingesetzt. Der hierin verwendete Begriff Polyvinylchlorid umfaßt dabei gebräuchliche Homo- und Copolymerisate von Vinylchlorid sowie Abmischungen solcher Polyvinylchloridverbindungen mit anderen Polymermassen. Derartige Polymerisate können auf beliebigen Wegen, beispielsweise durch Suspensions-, Emulsions- oder Blockpolymerisation hergestellt worden sein. Ihr K-Wert kann beispielsweise zwischen 50 und 100 liegen.

Es hat sich gezeigt, dass durch Verwendung einer erfindungsgemäßen Stabilisatorkombination insbesondere Formkörper aus PVC-U für Außenanwendungen hergestellt werden können, die eine unerwartet hohe Bewitterungs- und Thermostabilität aufweisen sowie ausgezeichnete Verarbeitungseigenschaften zeigen.

Ein weiterer Gegenstand der vorliegenden Erfindung betrifft daher eine Polymerzusammensetzung, enthaltend eine Stabilisatorzusammensetzung und mindestens ein Polymeres, wobei als Stabilisatorzusammensetzung mindestens
a) Calciumhydroxid oder Calciumoxid oder ein Gemisch aus Calciumhydroxid und Calciumoxid als Komponente A und
b) mindestens ein β-Diketon oder ein Salz eines β-Diketons oder deren Gemisch als Komponente B und
c) mindestens ein hydroxylgruppenhaltiges Isocyanurat oder ein Gemisch aus zwei oder mehr hydroxylgruppenhaltigen Isocyanuraten als Komponente C,
   und als Polymeres
d) ein halogenhaltiges thermoplastisches Harz oder ein Gemisch aus zwei oder mehr halogenhaltigen thermoplastischen Harzen
enthalten ist und wobei Komponente B weniger als 33 Gew.-%, bezogen auf Komponente B, an Acetylaceton oder einem Salz von Acetylaceton oder einem Gemisch davon enthält. Eine erfindungsgemäße Polymerzusammensetzung enthält Komponente A vorzugsweise in einer Menge von 0,01 bis 2 phr, bezogen auf das halogenhaltige Harz. Eine erfindungsgemäße Polymerzusammensetzung enthält Komponente B vorzugsweise in einer Menge von 0,01 bis 1 Gewichtsteilen, bezogen auf das halogenhaltige Harz.

Eine erfindungsgemäße Polymerzusammensetzung erfüllt vorzugsweise eine oder mehrere der folgenden Bedingungen:
(i) der Gehalt an Komponente A beträgt 0,01 bis 0,8 phr, bezogen auf das zu stabilisierende thermoplastische Harz oder die zu stabilisierenden thermoplastischen Harze,
(ii) der Gehalt an Komponente B beträgt 0,01 bis 0,6 phr, bezogen auf das zu stabilisierende thermoplastische Harz oder die zu stabilisierenden thermoplastischen Harze,
(iii) der Gehalt an Komponente C beträgt 0,01 bis 0,59 phr, bezogen auf das zu stabilisierende thermoplastische Harz oder die zu stabilisierenden thermoplastischen Harze,
(iv) der Gehalt an Komponente A beträgt 0,1 bis 12 Gew.-%, bezogen auf das Gesamtgewicht der Stabilisatorzusammensetzung,
(v) der Gehalt an Komponente B beträgt 0,1 bis 18 Gew.-%, bezogen auf das Gesamtgewicht der Stabilisatorzusammensetzung,
(vi) der Gehalt an Komponente C beträgt 0,1 bis 15 Gew.-%, bezogen auf das Gesamtgewicht der Stabilisatorzusammensetzung,
(vü) das Gewichtsverhältnis von Komponente B zu Komponente C ist größer als 1.

Es hat sich erfindungsgemäß herausgestellt, dass besonders gute Ergebnisse erzielt werden können, wenn die Polymerzusammensetzung die Komponente A in einer Menge von 0,01 bis 2 phr, bezogen auf das zu stabilisierende thermoplastische Harz oder die zu stabilisierenden thermoplastischen Harze, enthält. Besonders geeignete Anteile an Komponente A liegen beispielsweise in einem Bereich von etwa 0,05 bis etwa 1,0 phr, oder innerhalb eines Bereichs von etwa 0,08 bis etwa 0,8 phr. Ebenfalls geeignet sind beispielsweise Mengen von etwa 0,1 bis etwa 0,5 phr, beispielsweise etwa 0,15 bis etwa 0,45 phr oder etwa noch in 0,2 bis etwa 0,4 phr oder etwa 0,25 bis etwa 0,35 phr oder etwa 0,28 bis etwa 0,32 phr. Der Gehalt an Komponente A beträgt im Rahmen einer bevorzugten Ausführungsform der vorliegenden Erfindung etwa 0,05 bis 0,3299 phr, bezogen auf das zu stabilisierende thermoplastische Harz oder die zu stabilisierenden thermoplastischen Harze.

Die Komponente B ist in einer erfindungsgemäßen Polymerzusammensetzung vorzugsweise in einer Menge von etwa 0,01 bis etwa 2 phr, bezogen auf das zu stabilisierende thermoplastische Harz oder die zu stabilisierenden thermoplastischen Harze, enthalten. Besonders geeignete Mengen liegen beispielsweise innerhalb eines Bereichs von etwa 0,03 bis etwa 1,5 phr oder etwa 0,05 bis etwa 1,2 phr oder etwa 0,08 bis etwa 1 phr oder etwa 0,1 bis etwa 0,9 phr oder etwa 0,15 bis etwa 0,8 phr oder etwa 0,2 bis etwa 0,7 phr. Der Gehalt an Komponente B beträgt vorzugsweise etwa 0,2 bis 0,6 phr, beispielsweise etwa 0,3 bis etwa 0,55 phr, bezogen auf das zu stabilisierende halogenhaltige thermoplastische Harz oder die zu stabilisierenden halogenhaltigen thermoplastischen Harze.

Die Komponente C ist in einer erfindungsgemäßen Polymerzusammensetzung vorzugsweise in einer Menge von etwa 0,01 bis etwa 3 phr, bezogen auf das zu stabilisierende thermoplastische Harz oder die zu stabilisierenden thermoplastischen Harze, enthalten. Besonders geeignete Mengen liegen beispielsweise innerhalb eines Bereichs von etwa 0,03 bis etwa 2 phr oder etwa 0,05 bis etwa 1,5 phr oder etwa 0,06 bis etwa 1 phr oder etwa 0,08 bis etwa 0,8 phr oder etwa 0,09 bis etwa 0,5 phr oder etwa 0,1 bis etwa 0,3 phr.

Eine erfindungsgemäße Polymerzusammensetzung enthält vorzugsweise einen Hydrotalcit oder ein Gemisch aus zwei oder mehr Hydrotalciten. Ebenfalls vom Umfang der Erfindung betroffen sind Polymerzusammensetzungen, die ein Zinksalz oder ein Gemisch aus zwei oder mehr Zinksalzen enthalten.

Eine erfmdungsgemäße Polymerzusammensetzung enthält Calciumacetylacetonat oder Zinkacetylacetonat oder deren Gemisch vorzugsweise in einer Menge von weniger als 0,1 phr, bezogen auf das zu stabilisierende thermoplastische Harz oder die zu stabilisierenden thermoplastischen Harze. Besonders bevorzugte Gehalte an Ca-Acetylacetonat oder Zn-Acetylacetonat oder deren Gemisch sind dem vorliegenden Text im Rahmen der Beschreibung der erfindungsgemäßen Stabilisatorzusammensetzungen zu entnehmen.

Für eine Polymerzusammensetzung gemäß der vorliegenden Erfindung gelten daher hinsichtlich der in einer solchen Polymerzusammensetzung enthaltenen Stabilisatorkomponenten die bereits im Hinblick auf die Stabilisatorzusammensetzung gemachten Ausführungen. Die Polymerzusammensetzungen gemäß der vorliegenden Erfindung unterscheiden sich von den erfindungsgemäßen Stabilisatorzusammensetzungen letztendlich dadurch, dass die Stabilisatorzusammensetzungen kein Polymeres enthalten. Ansonsten sind die Eigenschaften der in der Polymerzusammensetzung enthaltenen Stabilisatorzusammensetzungen und der erfindungsgemäßen Stabilisatorzusammensetzungen identisch, so dass die oben genannten Ausführungen hinsichtlich der Stabilisatorzusammensetzungen auch auf die in den Polymerzusammensetzungen enthaltenen Stabilisatorkomponenten gelten.

Im Rahmen einer bevorzugten Ausführungsform der vorliegenden Erfindung enthält eine erfindungsgemäße Polymerzusammensetzung die erfindungsgemäße Stabilisatorzusammensetzung in einer Menge von etwa 0,1 bis 20 phr, insbesondere etwa 0,5 bis etwa 15 phr oder etwa 1 bis etwa 12 phr oder etwa 1,5 bis 5 phr. Die für den Einzelfall optimale Menge hängt dabei auch von den verwendeten Gleitmitteln ab. Die Einheit phr steht für "per hundred resin" und betrifft damit Gewichtsteile pro 100 Gewichtsteile Polymeres. Geeignete Einsatzmengen liegen beispielsweise innerhalb eines Bereichs von etwa 2 - 3 phr bzw. 3 - 4 phr, wenn ein Anteil an Verarbeitungshilfsmitteln hinzugerechnet wird.

Eine erfindungsgemäße Polymerzusammensetzung enthält die erfindungsgemäße Stabilisatorzusammensetzung in einer Menge von beispielsweise etwa 0,05 bis 20 Gew.-% oder etwa 0,1 bis etwa 15 Gew.-% oder etwa 0,5 bis etwa 12 Gew.-% oder etwa 1 bis etwa 10 Gew.-% oder etwa 1,3 bis etwa 8 Gew.-% oder etwa 1,5 bis etwa 5 Gew.-% bezogen auf den Gehalt an halogenierten Polymeren.

Vorzugsweise enthält eine erfindungsgemäße Polymerzusammensetzung als halogeniertes Polymeres zumindest anteilsweise PVC, wobei der PVC-Anteil insbesondere mindestens etwa 20, vorzugsweise mindestens etwa 50 Gew.-%, beispielsweise mindestens etwa 80 oder mindestens etwa 90 Gew.-% beträgt.

Die Vermischung von Polymeren oder Polymeren und der erfindungsgemäßen Stabilisatorzusammensetzung zur Herstellung der erfindungsgemäßen Polymerzusammensetzungen kann grundsätzlich zu jedem beliebigen Zeitpunkt vor oder während der Verarbeitung des Polymeren erfolgen. So kann die Stabilisatorzusammensetzung beispielsweise dem in Pulver- oder Granulatform vorliegenden Polymeren vor der Verarbeitung zugemischt werden. Es ist jedoch ebenso möglich, die Stabilisatorzusammensetzung dem Polymeren oder den Polymeren in erweichtem oder geschmolzenem Zustand, beispielsweise während der Verarbeitung in einem Extruder zuzusetzen.

Gegenstand der vorliegenden Erfindung ist daher auch ein Verfahren zur Herstellung einer Polymerzusammensetzung, enthaltend eine Stabilisatorzusammensetzung und mindestens ein Polymeres, bei dem mindestens
a) Calciumhydroxid oder Calciumoxid oder ein Gemisch aus Calciumhydroxid und Calciumoxid als Komponente A und
b) mindestens ein β-Diketon oder ein Salz eines β-Diketons oder deren Gemisch als Komponente B und
c) mindestens ein hydroxylgruppenhaltiges Isocyanurat oder ein Gemisch aus zwei oder mehr hydroxylgruppenhaltigen Isocyanuraten als Komponente C und
d) mindestens ein halogenhaltiges thermoplastisches Harz oder ein Gemisch aus zwei oder mehr halogenhaltigen thermoplastischen Harzen
miteinander vermischt werden, wobei Komponente B weniger als 33 Gew.-%, bezogen auf Komponente B, an Acetylaceton oder einem Salz von Acetylaceton oder einem Gemisch davon enthält.

Die erfindungsgemäße Stabilisatorzusammensetzung kann in beliebiger physikalischer Form, z. B. als Pulvermischung, Press-, Sprüh- oder Microgranulat, Schuppe oder Pastille oder Extrudat vorliegen. Diese Produktformen können entweder aus Pulvermischungen durch Druck und/oder Temperatur und/oder durch Zugabe von Granulierhilfsmitteln in Granulatform gebracht werden oder durch Abkühlen bzw. Absprühen von Schmelzen der erfindungsgemäßen Zusammensetzung zu Schuppen, Pastillen oder Prills geformt werden. Zur Herstellung von halogenhaltigen Harzmassen können die Einzelsubstanzen direkt oder als Mischung in den o.g. Produktformen vor oder während der Verarbeitung zugegeben werden. Die halogenhaltige thermoplastische Harzmasse kann dann in an sich bekannter Weise zu Formkörpern geformt werden.

Eine erfindungsgemäße Polymerzusammensetzung kann auf bekannte Weise in eine gewünschte Form gebracht werden. Geeignete Verfahren sind beispielsweise Kalandrieren, Extrudieren, Spritzgießen, Sintern, Extrusions-Blasen oder das Plastisol-Verfahren. Eine erfindungsgemäße Polymerzusammensetzung kann beispielsweise auch zur Herstellung von Schaumstoffen verwendet werden. Grundsätzlich eignen sich die erfindungsgemäßen Polymerzusammensetzung zur Herstellung von hart- oder weich-PVC.

Eine erfindungsgemäße Polymerzusammensetzung kann zu Formkörpern verarbeitet werden. Gegenstand der vorliegenden Erfindung sind daher auch Formkörper, mindestens enthaltend eine erfindungsgemäße Stabilisatorzusammensetzung oder eine erfindungsgemäße Polymerzusammensetzung.

Der Begriff "Formkörper" umfasst im Rahmen der vorliegenden Erfindung grundsätzlich alle dreidimensionalen Gebilde, die aus einer erfindungsgemäße Polymerzusammensetzung herstellbar sind. Der Begriff "Formkörper" umfasst im Rahmen der vorliegenden Erfindung beispielsweise Drahtummantelungen, Automobilbauteile, beispielsweise Automobilbauteile wie sie im Innenraum des Automobils, im Motorraum oder an den Außenflächen eingesetzt werden, Kabelisolierungen, Kabelummantelungen, Dekorationsfolien, Agrarfolien, Schläuche, Dichtungsprofile, Bürofolien, Hohlkörper (Flaschen), Verpackungsfolien (Tiefziehfolien), Blasfolien, Rohre, Schaumstoffe, Schwerprofile (Fensterrahmen), Lichtwandprofile, Bauprofile, Sidings, Fittings, Platten, Schaumplatten, Coextrudate mit recyceltem Kern oder Gehäuse für elektrische Apparaturen oder Maschinen, beispielsweise Computer oder Haushaltsgeräte. Weitere Beispiele für aus einer erfindungsgemäßen Polymerzusammensetzung herstellbare Formkörper sind Kunstleder, Bodenbeläge, Textilbeschichtungen, Tapeten, Coil-Coatings oder Unterbodenschutz für Kraftfahrzeuge.

Gegenstand der vorliegenden Erfindung ist auch die Verwendung einer erfindungsgemäßen Stabilisatorzusammensetzung oder einer erfindungsgemäß hergestellten Stabilisatorzusammensetzung oder einer erfindungsgemäßen Polymerzusammensetzung bei der Herstellung von polymeren Formkörpern oder Oberflächenbeschichtungsmitteln.

Insbesondere ist Gegenstand der Erfindung die Verwendung einer Stabilisatorzusammensetzung zur Stabilisierung eines halogenhaltigen thermoplastischen Harzes oder eines Gemischs aus zwei oder mehr halogenhaltigen thermoplastischen Harzen, wobei die Stabilisatorzusammensetzung mindestens
a) Calciumhydroxid oder Calciumoxid oder ein Gemisch aus Calciumhydroxid und Calciumoxid als Komponente A und
b) mindestens ein β-Diketon oder ein Salz eines β-Diketons oder deren Gemisch als Komponente B und
c) mindestens ein hydroxylgruppenhaltiges Isocyanurat oder ein Gemisch aus zwei oder mehr hydroxylgruppenhaltigen Isocyanuraten als Komponente C
enthält, wobei Komponente B weniger als 33 Gew.-%, bezogen auf Komponente B, an Acetylaceton oder einem Salz von Acetylaceton oder einem Gemisch davon enthält.
Die Erfindung wird nachfolgend durch Beispiele näher erläutert.

### Beispiel 1:

Zunächst wurde die Reaktivität der einzelnen Komponenten bzw. die Wechselwirkung von jeweils zwei Komponenten untersucht. Dazu wurden jeweils zwei Komponenten als Pulver gemischt und insgesamt 2 Stunden bei 190°C behandelt. Das Reaktionsverhalten wurde dabei in bestimmten Abständen optisch beurteilt.

**Tabelle 1: Reaktion von jeweils zwei Komponenten bei 190°C / 2 h**

| | | |
|---|---|---|
| | Ca-Acetylacetonat | Stearoylbenzoylmethan |
| Irganox 1076* | - | + |
| Glycerintristearat | - | + |
| THEIC | - | + |
| Stearoylbenzoylmethan | - | |

* phenolisches Antioxidans - deutliche Reaktivität (Schwarzfärbung) + keine Reaktivität

Aus diesen Versuchen ist ersichtlich, dass Calciumacetylacetonat dazu neigt mit anderen Stabilisatorkomponenten unter deutlichen Farb- und Konsistenzveränderungen zu reagieren. Dabei gehen die Farbveränderungen bis hin zur Schwarzfärbung der Mischung. Stearoylbenzoylmethan weist hingegen unter gleichen Bedingungen mit den gleichen potentiellen Reaktionspartnern keine Reaktion sowie keine Veränderungen der Farbe und Konsistenz auf.

### Beispiel 2:

Weiterhin wurden Zweikomponentenmischungen bestimmten Lagerkonditionen ausgesetzt und anschließend anwendungstechnisch untersucht. Als Lagerbedingungen wurden die folgende Konditionen festgelegt: Raumtemperatur, Raumtemperatur und 80 % relative Luftfeuchte, 45°C sowie 45°C und 80 % relative Luftfeuchte. Die nachfolgende Tabelle gibt einen Überblick über die angesetzten Mischungen sowie deren Farbe und Konsistenz nach einem Monat Lagerung unter den jeweiligen Bedingungen.

**Tabelle 2: Lagerstabilität von Zweikomponentenmischungen**

| | | | | |
|---|---|---|---|---|
| | 23°C | 23°C, 80% H₂O | 45°C | 45°C, 80% H₂O |
| Irganox 1076* / Calciumacetylacetonat | 1 | 1 | 5 | 5 |
| Glycerintristearat / Calciumacetylacetonat | 1 | 1 | 2 | 4 |
| Stearoylbenzoylmethan / Calciumacetylacetonat | 3 | 4 | 5 | 6 |

| | | | | |
|---|---|---|---|---|
| * phenolisches Antioxidans | | | | |

1 weißes Pulver 2 weißes festgebackenes Pulver 3 leichter Gelbstich 4 leichter Gelbstich und klebrig 5 gelb und stark klebrig bzw. gelbbraun und pulvrig 6 gelbbraun, klebrig und fest

Als besonders kritisch erweist sich die Kombination von Stearoylbenzoylmethan und Calciumacetylacetonat, die nach einem Monat Lagerung bei 45°C und 80 % Luftfeuchtigkeit eine gelbbraune Färbung sowie eine klebrige Konsistenz aufwies. Doch auch die Mischungen von Calciumacetylacetonat mit phenolischem Antioxidans bzw. Glycerintristearat weisen bei höherer Lagertemperatur und Luftfeuchtigkeit starke Farb- und Konsistenzveränderungen auf.

### Beispiel 3:

Hinzu kommt, dass sich die während der Lagerung entstehende Verfärbung der Stabilisatormischung auch nachteilig auf die Farbe des extrudierten Profils auswirkt. Um dies zu veranschaulichen wurde eine bei 45°C und 80 % Luftfeuchte gelagerter Zweikomponentenmischung aus Stearoylbenzoylmethan und Calciumacetylacetonat zur Herstellung eines PVC-Prüflings verwendet. Anschließend wurde anhand des CIE-LAB-Farbsystems die Farbe des PVC-Prüflings ermittelt.

**Tabelle 3: Einflusses der lagerbedingten Farbeigenschaften einer Stabilisatormischung aus Stearoylbenzoylmethan und Calciumacetylacetonat auf die Farbe des extrudierten Profils**

| | | |
|---|---|---|
| | unbehandelter Standard | 45°C, 80% H₂O |
| L | 94,60 | 93,94 |
| a | 0,78 | 0,86 |
| b | 4,14 | 6,56 |

Tabelle 3 veranschaulicht, dass die Lagerung der Stabilisatormischung alle drei CIE-LAB-Werte des damit hergestellten PVC-Prüflings deutlich verschlechter.

### Beispiel 4:

Zur Überprüfung der Wirksamkeit der erfindungsgemäßen Stabilisatorzusammensetzungen wurden die in der folgenden Tabelle 3 angegebenen Rezepturen hergestellt. Die Rezeptur A1 entspricht einer erfindungsgemäßen Zusammensetzung, während die Rezepturen V1, V2 und V3 zu Vergleichszwecken getestet wurden.

**Tabelle 4.1: Beispielrezepturen**

| | | | | |
|---|---|---|---|---|
| | V1 | V2 | V3 | A1 |
| PVC, K 60 | 100 | 100 | 100 | 100 |
| Zinkstearat | 0,2 | 0,2 | 0,2 | 0,2 |
| Zinkoctoat | 0,2 | 0,2 | 0,2 | 0,2 |
| Alcamizer 4 | 0,6 | 0,6 | 0,6 | 0,6 |
| THEIC | 0,1 | 0,1 | 0,1 | 0,1 |
| Pentaerythrit | 0,5 | 0,5 | 0,5 | 0,5 |
| Pentaerythritdistearat | 0,5 | 0,5 | 0,5 | 0,5 |
| Stearoylbenzoylmethan | 0,1 | 0,5 | 0,1 | 0,5 |
| Calciumacetylacetonat | 0,4 | | 0,4 | |
| Calciumstearat | 0,25 | 0,25 | | |
| Calciumhydroxid | | | 0,25 | 0,25 |

Die nach den angegebenen Rezepturen gefertigten Dryblends wurden auf einem Walzwerk zu Fellen verarbeitet und zu Pressplatten (1 mm) verpresst. Die so erhaltenen PVC-Prüflinge wurden einem DHC-Test nach DIN 53381 Teil 1 Verfahren B und einem Mathis-Test bei 200°C (5 min Schritte) unterzogen. Darüber hinaus wurde an den Pressplatten die Anfangsfarbe der transparenten Proben vor weißem Hintergrund anhand des CIE-LAB-Farbsystems gemessen. Die Ergebnisse der Untersuchungen sind der folgenden Tabelle 4.2 zu entnehmen.

**Tabelle 4.2: Untersuchungsergebnisse**

| | | | | | |
|---|---|---|---|---|---|
| | | V1 | V2 | V3 | A1 |
| Stat. Stabilität | DHC-Stabilität | 32 | 22 | 35 | 29 |
| Anfangsfarbe | L*-Wert | 83,35 | 83,2 | 81,21 | 85,57 |
| | a*-Wert | -3,13 | -1,49 | -4,90 | -1,88 |
| | b*-Wert | 14,62 | 8,12 | 22,69 | 7,49 |
| Mathis-Test | Beginn Gelbverfärbung [min] | 5 | 20 | 15 | 20 |
| | Beginn Braunverfärbung [min] | 35 | 30 | 30 | 35 |

Tabelle 4.2 veranschaulicht, dass eine erfindungsgemäße Stabilisatorzusammensetzung eine gute DHC-Stabilität liefert. Hinzu kommt, dass die erfindungsgemäße Stabilisatorzusammensetzung die besten Werte für den Weiß- und Gelbanteil (L- und +b*-Wert) der Anfangsfarbe aufweist. Darüber hinaus weist die erfindungsgemäße Stabilisatorzusammensetzung eine sehr gute Thermostabilität auf. Dies zeigen die Ergebnisse des Mathis-Tests, in dem die erfmdungsgemäße Stabilisatorzusammensetzung als einzige Stabilisatorzusammmensetung die höchste Farbstabilität sowohl bis zum Einsetzen der Gelbverfärbung als auch bis zum Beginn der Braunverfärbung besitzt.

## Patentansprüche

1. Stabilisatorzusammensetzung zur Stabilisierung halogenhaltiger thermoplastischer Harze, umfassend
a) Calciumhydroxid oder Calciumoxid oder ein Gemisch aus Calciumhydroxid und Calciumoxid als Komponente A und
b) mindestens ein β-Diketon oder ein Salz eines β-Diketons oder deren Gemisch als Komponente B und
c) mindestens ein hydroxylgruppenhaltiges Isocyanurat oder ein Gemisch aus zwei oder mehr hydroxylgruppenhaltigen Isocyanuraten als Komponente C
wobei Komponente B weniger als 33 Gew.-%, bezogen auf Komponente B, an Acetylaceton oder einem Salz von Acetylaceton oder einem Gemisch davon enthält.

2. Stabilisatorzusammensetzung nach Anspruch 1, **dadurch gekennzeichnet, dass** Komponente B weniger als 20 Gew.-%, bezogen auf Komponente B, an Acetylaceton oder einem Salz von Acetylaceton oder einem Gemisch davon enthält.

3. Stabilisatorzusammensetzung nach Anspruch 1 oder 2, worin die Komponente A in einer Menge von 0,01 bis 2 phr, bezogen auf das zu stabilisierende thermoplastische Harz oder die zu stabilisierenden thermoplastischen Harze, enthalten ist.

4. Stabilisatorzusammensetzung nach einem der Ansprüche 1 bis 3, worin das hydroxylgruppenhaltige Isocyanurat gewählt wird aus Verbindungen der allge meinen Formel (I) 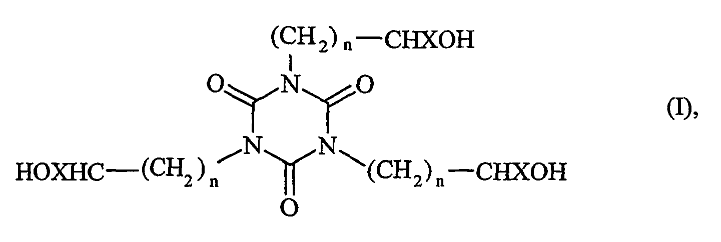 worin die Gruppen X und die Indices n gleich oder verschieden sind und n für eine ganze Zahl von 0 bis 5 und X für ein Wasserstoffatom oder für eine lineare oder verzweigte Alkylgruppe mit 1 bis 6 Kohlenstoffatomen steht.

5. Stabilisatorzusammensetzung nach einem der Ansprüche 1 bis 4, **dadurch gekennzeichnet, dass** eine oder mehrere der folgenden Bedingungen erfüllt sind:
(i) der Gehalt an Komponente A beträgt 0,01 bis 0,8 phr, bezogen auf das zu stabilisierende thermoplastische Harz oder die zu stabilisierenden thermoplastischen Harze,
(ii) der Gehalt an Komponente B beträgt 0,01 bis 0,6 phr, bezogen auf das zu stabilisierende thermoplastische Harz oder die zu stabilisierenden thermoplastischen Harze,
(iii) der Gehalt an Komponente C beträgt 0,01 bis 0,59 phr, bezogen auf das zu stabilisierende thermoplastische Harz oder die zu stabilisierenden thermoplastischen Harze,
(iv) das Gewichtsverhältnis von Komponente B zu Komponente C ist größer als 1.

6. Stabilisatorzusammensetzung nach einem der Ansprüche 1 bis 5, **dadurch gekennzeichnet, dass** eine oder mehrere der folgenden Bedingungen erfüllt sind:
(i) der Gehalt an Komponente A beträgt 0,1 bis 12 Gew.-%, bezogen auf das Gesamtgewicht der Stabilisatorzusammensetzung,
(ii) der Gehalt an Komponente B beträgt 0,1 bis 18 Gew.-%, bezogen auf das Gesamtgewicht der Stabilisatorzusammensetzung,
(iii) der Gehalt an Komponente C beträgt 0,1 bis 15 Gew.-%, bezogen auf das Gesamtgewicht der Stabilisatorzusammensetzung,
(iv) das Gewichtsverhältnis von Komponente B zu Komponente C ist größer als 1.

7. Stabilisatorzusammensetzung nach einem der Ansprüche 1 bis 6, **dadurch gekennzeichnet, dass** die Stabilisatorzusammensetzung einen Hydrotalcit oder ein Gemisch aus zwei oder mehr Hydrotalciten enthält.

8. Stabilisatorzusammensetzung nach einem der Ansprüche 1 bis 7, **dadurch gekennzeichnet, dass** die Stabilisatorzusammensetzung ein Zinksalz oder ein Gemisch aus zwei oder mehr Zinksalzen enthält.

9. Stabilisatorzusammensetzung nach einem der Ansprüche 1 bis 8, **dadurch gekennzeichnet, dass** die Stabilisatorzusammensetzung ein Gemisch aus Zinkstearat und mindestens einem weiteren organischen Zinkcarboxylat enthält.

10. Stabilisatorzusammensetzung nach einem der Ansprüche 1 bis 9, **dadurch gekennzeichnet, dass** die Stabilisatorzusammensetzung Calciumacetylacetonat oder Zinkacetylacetonat oder deren Gemisch in einer Menge von weniger als 0,1 phr, bezogen auf die zu stabilisierenden thermoplastischen Harze, enthält.

11. Stabilisatorzusammensetzung nach einem der Ansprüche 1 bis 10, **dadurch gekennzeichnet, dass** die Stabilisatorzusammensetzung ein Triglycerid enthält.

12. Polymerzusammensetzung, enthaltend eine Stabilisatorzusammensetzung und mindestens ein Polymeres, wobei als Stabilisatorzusammensetzung mindestens
a) Calciumhydroxid oder Calciumoxid oder ein Gemisch aus Calciumhydroxid und Calciumoxid als Komponente A und
b) mindestens ein β-Diketon oder ein Salz eines β-Diketons oder deren Gemisch als Komponente B und
c) mindestens ein hydroxylgruppenhaltiges Isocyanurat oder ein Gemisch aus zwei oder mehr hydroxylgruppenhaltigen Isocyanuraten als Komponente C
und als Polymeres
d) ein halogenhaltiges thermoplastisches Harz oder ein Gemisch aus zwei oder mehr halogenhaltigen thermoplastischen Harzen
enthalten ist und wobei Komponente B weniger als 33 Gew.-%, bezogen auf Komponente B, an Acetylaceton oder einem Salz von Acetylaceton oder einem Gemisch davon enthält.

13. Polymerzusammensetzung nach Anspruch 12, **dadurch gekennzeichnet, dass** die Komponente A in einer Menge von 0,01 bis 2 phr, bezogen auf das halogenhaltige Harz, enthalten ist.

14. Polymerzusammensetzung nach einem der Ansprüche 12 oder 13, **dadurch gekennzeichnet, dass** die Komponente B in einer Menge von 0,01 bis 1 Gewichtsteilen, bezogen auf das halogenhaltige Harz, enthalten ist.

15. Polymerzusammensetzung nach einem der Ansprüche 12 bis 14, **dadurch gekennzeichnet, dass** eine oder mehrere der folgenden Bedingungen erfüllt sind:
(i) der Gehalt an Komponente A beträgt 0,01 bis 0,8 phr, bezogen auf das zu stabilisierende thermoplastische Harz oder die zu stabilisierenden thermoplastischen Harze,
(ii) der Gehalt an Komponente B beträgt 0,01 bis 0,6 phr, bezogen auf das zu stabilisierende thermoplastische Harz oder die zu stabilisierenden thermoplastischen Harze,
(iii) der Gehalt an Komponente C beträgt 0,01 bis 0,59 phr, bezogen auf das zu stabilisierende thermoplastische Harz oder die zu stabilisierenden thermoplastischen Harze,
(iv) das Gewichtsverhältnis von Komponente B zu Komponente C ist größer als 1.

16. Polymerzusammensetzung nach einem der Ansprüche 12 bis 15, **dadurch gekennzeichnet, dass** eine oder mehrere der folgenden Bedingungen erfüllt sind:
(i) der Gehalt an Komponente A beträgt 0,1 bis 12 Gew.-%, bezogen auf das Gesamtgewicht der Stabilisatorzusammensetzung,
(ii) der Gehalt an Komponente B beträgt 0,1 bis 18 Gew.-%, bezogen auf das Gesamtgewicht der Stabilisatorzusammensetzung,
(iii) der Gehalt an Komponente C beträgt 0,1 bis 15 Gew.-%, bezogen auf das Gesamtgewicht der Stabilisatorzusammensetzung,
(iv) das Gewichtsverhältnis von Komponente B zu Komponente C ist größer als 1.

17. Polymerzusammensetzung nach einem der Ansprüche 12 bis 16, **dadurch gekennzeichnet, dass** sie einen Hydrotalcit oder ein Gemisch aus zwei oder mehr Hydrotalciten enthält.

18. Polymerzusammensetzung nach einem der Ansprüche 12 bis 17, **dadurch gekennzeichnet, dass** sie ein Zinksalz oder ein Gemisch aus zwei oder mehr Zinksalzen enthält.

19. Polymerzusammensetzung nach einem der Ansprüche 12 bis 18, **dadurch gekennzeichnet, dass** sie Calciumacetylacetonat oder Zinkacetylacetonat oder deren Gemisch in einer Menge von weniger als 0,1 phr, bezogen auf das zu stabilisierende thermoplastische Harz oder die zu stabilisierenden thermoplastischen Harze, enthält.

20. Verfahren zur Herstellung einer Stabilisatorzusammensetzung zur Stabilisierung halogenhaltiger thermoplastischer Harze, bei dem
a) Calciumhydroxid oder Calciumoxid oder ein Gemisch aus Calciumhydroxid und Calciumoxid als Komponente A und
b) mindestens ein β-Diketon oder ein Salz eines β-Diketons oder deren Gemisch als Komponente B und
c) mindestens ein hydroxylgruppenhaltiges Isocyanurat oder ein Gemisch aus zwei oder mehr hydroxylgruppenhaltigen Isocyanuraten als Komponente C
miteinander vermischt werden, wobei Komponente B weniger als 33 Gew.-%, bezogen auf Komponente B, an Acetylaceton oder einem Salz von Acetylaceton oder einem Gemisch davon enthält.

21. Verfahren zur Herstellung einer Polymerzusammensetzung, enthaltend eine Stabilisatorzusammensetzung und mindestens ein Polymeres, bei dem mindestens
a) Calciumhydroxid oder Calciumoxid oder ein Gemisch aus Calciumhydroxid und Calciumoxid als Komponente A und
b) mindestens ein β-Diketon oder ein Salz eines β-Diketons oder deren Gemisch als Komponente B und
c) mindestens ein hydroxylgruppenhaltiges Isocyanurat oder ein Gemisch aus zwei oder mehr hydroxylgruppenhaltigen Isocyanuraten als Komponente C und
d) ein halogenhaltiges thermoplastisches Harz oder ein Gemisch aus zwei oder mehr halogenhaltigen thermoplastischen Harzen
miteinander vermischt werden, wobei Komponente B weniger als 33 Gew.-%, bezogen auf Komponente B, an Acetylaceton oder einem Salz von Acetylaceton oder einem Gemisch davon enthält.

22. Verfahren zur Stabilisierung eines halogenhaltigen thermoplastischen Harzes oder eines Gemischs aus zwei oder mehr halogenhaltigen thermoplastischen Harzen, bei dem eine Stabilisatorzusammensetzung und mindestens ein halogenhaltiges thermoplastisches Polymeres vermischt werden, wobei die Stabilisatorzusammensetzung mindestens
a) Calciumhydroxid oder Calciumoxid oder ein Gemisch aus Calciumhydroxid und Calciumoxid als Komponente A und
b) mindestens ein β-Diketon oder ein Salz eines β-Diketons oder deren Gemisch als Komponente B und
c) mindestens ein hydroxylgruppenhaltiges Isocyanurat oder ein Gemisch aus zwei oder mehr hydroxylgruppenhaltigen Isocyanuraten als Komponente C
enthält, wobei Komponente B weniger als 33 Gew.-%, bezogen auf Komponente B, an Acetylaceton oder einem Salz von Acetylaceton oder einem Gemisch davon enthält.

23. Formkörper, mindestens enthaltend eine Stabilisatorzusammensetzung gemäß einem der Ansprüche 1 bis 11 oder eine Polymerzusammensetzung gemäß Anspruch 12 bis 19.

24. Verwendung einer Stabilisatorzusammensetzung zur Stabilisierung eines halogenhaltigen thermoplastischen Harzes oder eines Gemischs aus zwei oder mehr halogenhaltigen thermoplastischen Harzen, wobei die Stabilisatorzusammensetzung mindestens
a) Calciumhydroxid oder Calciumoxid oder ein Gemisch aus Calciumhydroxid und Calciumoxid als Komponente A und
b) mindestens ein β-Diketon oder ein Salz eines β-Diketons oder deren Gemisch als Komponente B und
c) mindestens ein hydroxylgruppenhaltiges Isocyanurat oder ein Gemisch aus zwei oder mehr hydroxylgruppenhaltigen Isocyanuraten als Komponente C
enthält, wobei Komponente B weniger als 33 Gew.-%, bezogen auf Komponente B, an Acetylaceton oder einem Salz von Acetylaceton oder einem Gemisch davon enthält.

## Claims

1. Stabiliser composition for stabilising halogen-containing thermoplastic resins, comprising
a) calcium hydroxide or calcium oxide or a mixture of calcium hydroxide and calcium oxide as component A and
b) at least one β-diketone or salt of a β-diketone or a mixture thereof as component B and
c) at least one hydroxyl-group-containing isocyanurate or a mixture of two or more hydroxyl-group-containing isocyanurates as component C,
component B containing less than 33 % by weight, based on component B, acetylacetone or a salt of acetylacetone or a mixture thereof.

2. Stabiliser composition according to claim 1, **characterised in that** component B contains less than 20 % by weight, based on component B, acetylacetone or a salt of acetylacetone or a mixture thereof.

3. Stabiliser composition according to claim 1 or 2, wherein component A is included in an amount of from 0.01 to 2 phr, based on the thermoplastic resin to be stabilised or the thermoplastic resins to be stabilised.

4. Stabiliser composition according to one of claims 1 to 3, wherein the hydroxyl-group-containing isocyanurate is selected from compounds of the general formula (I) 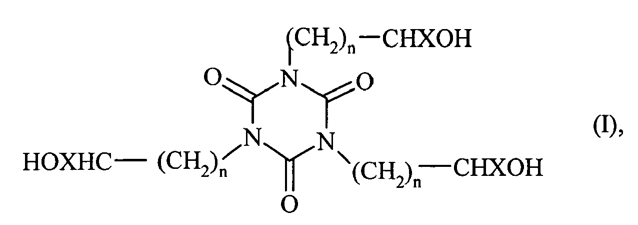 wherein the groups X and the indices n are the same or different and n is a whole number from 0 to 5 and X is a hydrogen atom or a linear or branched alkyl group containing from 1 to 6 carbon atoms.

5. Stabiliser composition according to one of claims 1 to 4, **characterised in that** one or more of the following conditions is/are met:
(i) the content of component A is from 0.01 to 0.8 phr, based on the thermoplastic resin to be stabilised or the thermoplastic resins to be stabilised,
(ii) the content of component B is from 0.01 to 0.6 phr, based on the thermoplastic resin to be stabilised or the thermoplastic resins to be stabilised,
(iii) the content of component C is from 0.01 to 0.59 phr, based on the thermoplastic resin to be stabilised or the thermoplastic resins to be stabilised,
(iv) the weight ratio of component B to component C is greater than 1.

6. Stabiliser composition according to one of claims 1 to 5, **characterised in that** one or more of the following conditions is/are met:
(i) the content of component A is from 0.1 to 12 % by weight, based on the total weight of the stabiliser composition,
(ii) the content of component B is from 0.1 to 18 % by weight, based on the total weight of the stabiliser composition,
(iii) the content of component C is from 0.1 to 15 % by weight, based on the total weight of the stabiliser composition,
(iv) the weight ratio of component B to component C is greater than 1.

7. Stabiliser composition according to one of claims 1 to 6, **characterised in that** the stabiliser composition comprises a hydrotalcite or a mixture of two or more hydrotalcites.

8. Stabiliser composition according to one of claims 1 to 7, **characterised in that** the stabiliser composition comprises a zinc salt or a mixture of two or more zinc salts.

9. Stabiliser composition according to one of claims 1 to 8, **characterised in that** the stabiliser composition comprises a mixture of zinc stearate and at least one further organic zinc carboxylate.

10. Stabiliser composition according to one of claims 1 to 9, **characterised in that** the stabiliser composition comprises calcium acetylacetonate or zinc acetylacetonate or a mixture thereof in an amount of less than 0.1 phr, based on the thermoplastic resins to be stabilised.

11. Stabiliser composition according to one of claims 1 to 10, **characterised in that** the stabiliser composition comprises a triglyceride.

12. Polymer composition comprising a stabiliser composition and at least one polymer, which comprises, as stabiliser composition, at least
a) calcium hydroxide or calcium oxide or a mixture of calcium hydroxide and calcium oxide as component A and
b) at least one β-diketone or salt of a β-diketone or a mixture thereof as component B and
c) at least one hydroxyl-group-containing isocyanurate or a mixture of two or more hydroxyl-group-containing isocyanurates as component C
and, as polymer,
d) a halogen-containing thermoplastic resin or a mixture of two or more halogen-containing thermoplastic resins,
and component B containing less than 33 % by weight, based on component B, acetylacetone or a salt of acetylacetone or a mixture thereof.

13. Polymer composition according to claim 12, **characterised in that** component A is included in an amount of from 0.01 to 2 phr, based on the halogen-containing resin.

14. Polymer composition according to one of claims 12 or 13, **characterised in that** component B is included in an amount of from 0.01 to 1 part by weight, based on the halogen-containing resin.

15. Polymer composition according to one of claims 12 to 14, **characterised in that** one or more of the following conditions is/are met:
(i) the content of component A is from 0.01 to 0.8 phr, based on the thermoplastic resin to be stabilised or the thermoplastic resins to be stabilised,
(ii) the content of component B is from 0.01 to 0.6 phr, based on the thermoplastic resin to be stabilised or the thermoplastic resins to be stabilised,
(iii) the content of component C is from 0.01 to 0.59 phr, based on the thermoplastic resin to be stabilised or the thermoplastic resins to be stabilised,
(iv) the weight ratio of component B to component C is greater than 1.

16. Polymer composition according to one of claims 12 to 15, **characterised in that** one or more of the following conditions is/are met:
(i) the content of component A is from 0.1 to 12 % by weight, based on the total weight of the stabiliser composition,
(ii) the content of component B is from 0.1 to 18 % by weight, based on the total weight of the stabiliser composition,
(iii) the content of component C is from 0.1 to 15 % by weight, based on the total weight of the stabiliser composition,
(iv) the weight ratio of component B to component C is greater than 1.

17. Polymer composition according to one of claims 12 to 16, **characterised in that** it comprises a hydrotalcite or a mixture of two or more hydrotalcites.

18. Polymer composition according to one of claims 12 to 17, **characterised in that** it comprises a zinc salt or a mixture of two or more zinc salts.

19. Polymer composition according to one of claims 12 to 18, **characterised in that** it comprises calcium acetylacetonate or zinc acetylacetonate or a mixture thereof in an amount of less than 0.1 phr, based on the thermoplastic resin to be stabilised or the thermoplastic resins to be stabilised.

20. Method of producing a stabiliser composition for stabilising halogen-containing thermoplastic resins, wherein
a) calcium hydroxide or calcium oxide or a mixture of calcium hydroxide and calcium oxide as component A and
b) at least one β-diketone or salt of a β-diketone or a mixture thereof as component B and
c) at least one hydroxyl-group-containing isocyanurate or a mixture of two or more hydroxyl-group-containing isocyanurates as component C
are mixed with one another, component B containing less than 33 % by weight, based on component B, acetylacetone or a salt of acetylacetone or a mixture thereof.

21. Method of producing a polymer composition comprising a stabiliser composition and at least one polymer, wherein at least
a) calcium hydroxide or calcium oxide or a mixture of calcium hydroxide and calcium oxide as component A and
b) at least one β-diketone or salt of a β-diketone or a mixture thereof as component B and
c) at least one hydroxyl-group-containing isocyanurate or a mixture of two or more hydroxyl-group-containing isocyanurates as component C and
d) a halogen-containing thermoplastic resin or a mixture of two or more halogen-containing thermoplastic resins
are mixed with one another, component B containing less than 33 % by weight, based on component B, acetylacetone or a salt of acetylacetone or a mixture thereof.

22. Method of stabilising a halogen-containing thermoplastic resin or a mixture of two or more halogen-containing thermoplastic resins, wherein a stabiliser composition and at least one halogen-containing thermoplastic polymer are mixed with one another, the stabiliser composition comprising at least
a) calcium hydroxide or calcium oxide or a mixture of calcium hydroxide and calcium oxide as component A and
b) at least one β-diketone or salt of a β-diketone or a mixture thereof as component B and
c) at least one hydroxyl-group-containing isocyanurate or a mixture of two or more hydroxyl-group-containing isocyanurates as component C,
component B containing less than 33 % by weight, based on component B, acetylacetone or a salt of acetylacetone or a mixture thereof.

23. Formed articles comprising, at least, a stabiliser composition according to one of claims 1 to 11 or a polymer composition according to claim 12 to 19.

24. Use of a stabiliser composition in stabilising a halogen-containing thermoplastic resin or a mixture of two or more halogen-containing thermoplastic resins, the stabiliser composition comprising at least
a) calcium hydroxide or calcium oxide or a mixture of calcium hydroxide and calcium oxide as component A and
b) at least one β-diketone or salt of a β-diketone or a mixture thereof as component B and
c) at least one hydroxyl-group-containing isocyanurate or a mixture of two or more hydroxyl-group-containing isocyanurates as component C,
component B containing less than 33 % by weight, based on component B, acetylacetone or a salt of acetylacetone or a mixture thereof.

## Revendications

1. Composition de stabilisateur destinée à la stabilisation de résines thermoplastiques contenant halogène, comprenant
a) de l'hydroxyde de calcium ou de l'oxyde de calcium ou un mélange d'hydroxyde de calcium et d'oxyde de calcium comme composant A et
b) au moins une β-dicétone ou un sel d'une β-dicétone ou leur mélange comme composant B et
c) au moins un isocyanurate contenant des groupes hydroxyle ou un mélange de deux isocyanurates ou plus contenant des groupes hydroxyle comme composant C
le composant B contenant moins de 33% en poids, par rapport au composant B, d'acétylacétone ou d'un sel d'acétylacétone ou d'un mélange de ceux-ci.

2. Composition de stabilisateur selon la revendication 1, **caractérisé en ce que** le composant B contient moins de 20% en poids, par rapport au composant B, d'acétylacétone ou d'un sel d'acétylacétone ou d'un mélange de ceux-ci.

3. Composition de stabilisateur selon la revendication 1 ou 2, dans laquelle le composant A est contenu en une quantité de 0,01 à 2 parties en poids par 100 parties en poids de résine, par rapport à la résine thermoplastique à stabiliser ou aux résines thermoplastiques à stabiliser.

4. Composition de stabilisateur selon l'une quelconque des revendications 1 à 3, dans laquelle l'isocyanurate contenant des groupes hydroxyle est choisi parmi les composés de formule générale (I) 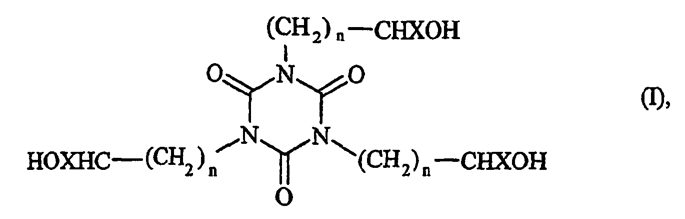 dans laquelle les groupes X et les indices n sont identiques ou différents et n représente un nombre entier de 0 à 5 et X représente un atome d'hydrogène ou un groupement alkyle linéaire ou ramifié comprenant 1 à 6 atomes de carbone.

5. Composition de stabilisateur selon l'une quelconque des revendications 1 à 4, **caractérisée en ce qu'**une ou plusieurs des conditions suivantes sont remplies:
(i) la teneur en composant A est de 0,01 à 0,8 partie en poids par 100 parties en poids de résine, par rapport à la résine thermoplastique à stabiliser ou aux résines thermoplastiques à stabiliser,
(ii) la teneur en composant B est de 0,01 à 0,6 partie en poids par 100 parties en poids de résine, par rapport à la résine thermoplastique à stabiliser ou aux résines thermoplastiques à stabiliser,
(iii) la teneur en composant C est de 0,01 à 0,59 partie en poids par 100 parties en poids de résine, par rapport à la résine thermoplastique à stabiliser ou aux résines thermoplastiques à stabiliser,
(iv) le rapport pondéral du composant B au composant C est supérieur à 1.

6. Composition de stabilisateur selon l'une quelconque des revendications 1 à 5, **caractérisée en ce qu'**une ou plusieurs des conditions suivantes sont remplies :
(i) la teneur en composant A est de 0,1 à 12% en poids, par rapport au poids total de la composition de stabilisateur,
(ii) la teneur en composant B est de 0,1 à 18% en poids, par rapport au poids total de la composition de stabilisateur,
(iii) la teneur en composant C est de 0,1 à 15% en poids, par rapport au poids total de la composition de stabilisateur,
(iv) le rapport pondéral du composant B au composant C est supérieur à 1.

7. Composition de stabilisateur selon l'une quelconque des revendications 1 à 6, **caractérisée en ce que** la composition de stabilisateur contient une hydrotalcite ou un mélange de deux hydrotalcites ou plus.

8. Composition de stabilisateur selon l'une quelconque des revendications 1 à 7, **caractérisée en ce que** la composition de stabilisateur contient un sel de zinc ou un mélange de deux sels de zinc ou plus.

9. Composition de stabilisateur selon l'une quelconque des revendications 1 à 8, **caractérisée en ce que** la composition de stabilisateur contient un mélange de stéarate de zinc et d'au moins un autre carboxylate de zinc organique.

10. Composition de stabilisateur selon l'une quelconque des revendications 1 à 9, **caractérisée en ce que** la composition de stabilisateur contient de acétylacétonate de calcium ou de l'acétylacétonate de zinc ou leur mélange en une quantité inférieure à 0,1 partie en poids par 100 parties en poids de résine, par rapport aux résines thermoplastiques à stabiliser.

11. Composition de stabilisateur selon l'une quelconque des revendications 1 à 10, **caractérisée en ce que** la composition de stabilisateur contient un triglycéride.

12. Composition de polymère, contenant une composition de stabilisateur et au moins un polymère, contenant, comme composition de stabilisateur au moins
a) de l'hydroxyde de calcium ou de l'oxyde de calcium ou un mélange d'hydroxyde de calcium et d'oxyde de calcium comme composant A et
b) au moins une β-dicétone ou un sel d'une β-dicétone ou leur mélange comme composant B et
c) au moins un isocyanurate contenant des groupes hydroxyle ou un mélange de deux isocyanurates ou plus contenant des groupes hydroxyle comme composant C et comme polymère
d) une résine thermoplastique contenant halogène ou un mélange de deux résines thermoplastiques ou plus contenant halogène
et le composant B contenant moins de 33% en poids, par rapport au composant B, d'acétylacétone ou d'un sel d'acétylacétone ou d'un mélange de ceux-ci.

13. Composition de polymère selon la revendication 12, **caractérisée en ce que** le composant A est contenu en une quantité de 0,01 à 2 parties en poids par 100 parties en poids de résine, par rapport à la résine contenant halogène.

14. Composition de polymère selon l'une quelconque des revendications 12 ou 13, **caractérisée en ce que** le composant B est contenu en une quantité de 0,01 à 1 partie en poids, par rapport à la résine contenant halogène.

15. Composition de polymère selon l'une quelconque des revendications 12 à 14, **caractérisée en ce qu'**une ou plusieurs des conditions suivantes sont remplies:
(i) la teneur en composant A est de 0,01 à 0,8 partie en poids par 100 parties en poids de résine, par rapport à la résine thermoplastique à stabiliser ou aux résines thermoplastiques à stabiliser,
(ii) la teneur en composant B est de 0,01 à 0,6 partie en poids par 100 parties en poids de résine, par rapport à la résine thermoplastique à stabiliser ou aux résines thermoplastiques à stabiliser,
(iii) la teneur en composant C est de 0,01 à 0,59 partie en poids par 100 parties en poids de résine, par rapport à la résine thermoplastique à stabiliser ou aux résines thermoplastiques à stabiliser,
(iv) le rapport pondéral du composant B au composant C est supérieur à 1.

16. Composition de polymère selon l'une quelconque des revendications 12 à 15, **caractérisée en ce qu'**une ou plusieurs des conditions suivantes sont remplies:
(i) la teneur en composant A est de 0,1 à 12% en poids, par rapport au poids total de la composition de stabilisateur,
(ii) la teneur en composant B est de 0,1 à 18% en poids, par rapport au poids total de la composition de stabilisateur,
(iii) la teneur en composant C est de 0,1 à 15% en poids, par rapport au poids total de la composition de stabilisateur,
(iv) le rapport pondéral du composant B au composant C est supérieur à 1.

17. Composition de polymère selon l'une quelconque des revendications 12 à 16, **caractérisée en ce qu'**elle contient un hydrotalcite ou un mélange de deux hydrotalcites ou plus.

18. Composition de polymère selon l'une quelconque des revendications 12 à 17, **caractérisée en ce qu'**elle contient un sel de zinc ou un mélange de deux sels de zinc ou plus.

19. Composition de polymère selon l'une quelconque des revendications 12 à 18, **caractérisée en ce qu'**elle contient de l'acétylacétonate de calcium ou de l'acétylacétonate de zinc ou leur mélange en une quantité inférieure à 0,1 partie en poids par 100 parties en poids de résine, par rapport à la résine thermoplastique à stabiliser ou aux résines thermoplastiques à stabiliser.

20. Procédé pour la préparation d'une composition de stabilisateur pour la stabilisation de résines thermoplastiques contenant halogène, dans lequel on mélange l'un avec l'autre
a) de l'hydroxyde de calcium ou de l'oxyde de calcium ou un mélange d'hydroxyde de calcium et d'oxyde de calcium comme composant A et
b) au moins une β-dicétone ou un sel d'une β-dicétone ou leur mélange comme composant B et
c) au moins un isocyanurate contenant des groupes hydroxyle ou un mélange de deux isocyanurates ou plus contenant des groupes hydroxyle comme composant C
le composant B contenant moins de 33% en poids, par rapport au composant B, d'acétylacétone ou d'un sel d'acétylacétone ou d'un mélange de ceux-ci.

21. Procédé pour la préparation d'une composition polymère, contenant une composition de stabilisateur et au moins un polymère, dans lequel on mélange au moins, l'un avec l'autre,
a) de l'hydroxyde de calcium ou de l'oxyde de calcium ou un mélange d'hydroxyde de calcium et d'oxyde de calcium comme composant A et
b) au moins une β-dicétone ou un sel d'une β-dicétone ou leur mélange comme composant B et
c) au moins un isocyanurate contenant des groupes hydroxyle ou un mélange de deux isocyanurates ou plus contenant des groupes hydroxyle comme composant C et
d) une résine thermoplastique contenant halogène ou un mélange de deux résines thermoplastiques ou plus contenant halogène
le composant B contenant moins de 33% en poids, par rapport au composant B, d'acétylacétone ou d'un sel d'acétylacétone ou d'un mélange de ceux-ci.

22. Procédé pour la stabilisation d'une résine thermoplastique contenant halogène ou d'un mélange de deux résines thermoplastiques ou plus contenant halogène, dans lequel on mélange une composition de stabilisateur et au moins un polymère thermoplastique contenant halogène, la composition de stabilisateur contenant au moins
a) de l'hydroxyde de calcium ou de l'oxyde de calcium ou un mélange d'hydroxyde de calcium et d'oxyde de calcium comme composant A et
b) au moins une β-dicétone ou un sel d'une β-dicétone ou leur mélange comme composant B et
c) au moins un isocyanurate contenant des groupes hydroxyle ou un mélange de deux isocyanurates ou plus contenant des groupes hydroxyle comme composant C
le composant B contenant moins de 33% en poids, par rapport au composant B, d'acétylacétone ou d'un sel d'acétylacétone ou d'un mélange de ceux-ci.

23. Corps façonné contenant au moins une composition de stabilisateur selon l'une quelconque des revendications 1 à 11 ou une composition de polymère selon la revendication 12 à 19.

24. Utilisation d'une composition de stabilisateur pour stabiliser une résine thermoplastique contenant halogène ou un mélange de deux résines thermoplastiques ou plus contenant halogène, la composition de stabilisateur contenant au moins
a) de l'hydroxyde de calcium ou de l'oxyde de calcium ou un mélange d'hydroxyde de calcium et d'oxyde de calcium comme composant A et
b) au moins une β-dicétone ou un sel d'une β-dicétone ou leur mélange comme composant B et
c) au moins un isocyanurate contenant des groupes hydroxyle ou un mélange de deux isocyanurates ou plus contenant des groupes hydroxyle comme composant C
le composant B contenant moins de 33% en poids, par rapport au composant B, d'acétylacétone ou d'un sel d'acétylacétone ou d'un mélange de ceux-ci.
